# EUROPEAN PATENT APPLICATION

(11) **EP 4 574 712 A1**
(43) Date of publication of application: **25.06.2025**
(21) Application number: 23854532.1
(22) Date of filing: 18.08.2023
(51) Int. Cl.: B65G 1/04, B65G 1/137, B65G 13/06

(54) **GOODS HANDLING METHOD, GOODS HANDLING DEVICE, DOUBLE-MATERIAL-BOX ROBOT, AND WAREHOUSING SYSTEM**

(30) Priority: 19.08.2022 CN 202211001681; 19.08.2022 CN 202222201141 U; 19.08.2022 CN 202211001683; 22.08.2022 CN 202211008772
(71) Applicant: Hangzhou Hikrobot Co., Ltd., Hangzhou, Zhejiang 310051 (CN)
(72) Inventor: QIAO, Zhi, Hangzhou, Zhejiang 310051 (CN); WU, Yonghai, Hangzhou, Zhejiang 310051 (CN); WU, Chao, Hangzhou, Zhejiang 310051 (CN)
(74) Representative: Michalski Hüttermann & Partner Patentanwälte mbB
(86) International application number: PCT/CN2023/113840
(87) International publication number: WO 2024/037637

(57) **Abstract**

A goods handling device includes a handling mechanism and a storage mechanism. The handling mechanism includes a pickup device and a first conveying device, where the pickup device is used for transferring goods such that the goods can be translated between the first conveying device and the shelf. The conveying direction of the first conveying device intersects with the moving direction of the pickup device. The storage mechanism includes a first storage shelf and a second storage shelf, each having storage spaces for storing the goods. The first storage shelf and the second storage shelf are arranged on the same side or both sides of the first conveying device along the conveying direction of the first conveying device. The above solution can solve the problem of low transferring efficiency of the goods handling device.

## Description

### TECHNICAL FIELD

The present disclosure relates to the technical field of warehousing and logistics, in particular to goods handling methods and devices, double-bin robots, and warehousing systems.

### BACKGROUND

A traditional warehousing and logistics work requires manual handling of goods, which inevitably results in high labor intensity. Therefore, relevant technologies adopt a goods handling device to achieve goods transferring and improve warehousing efficiency.

In related arts, a goods handling device includes a handling mechanism and a storage mechanism. When goods are to be transferred, the goods handling device is moved to a location of the shelf, the goods on the shelf is transferred to the storage mechanism by the handling mechanism, then the goods are moved to the desired location, and the handling mechanism then unloads the goods from the storage mechanism onto the designated shelf.

### SUMMARY

The present disclosure discloses goods handling methods and apparatuses, double-bin robots, and warehousing systems.

The present disclosure adopts the following technical solutions.

In the first aspect, the present disclosure provides a goods handling method based on a goods handling device, where the goods handling device includes a handling mechanism and a storage mechanism; and the goods handling method includes: transferring, by the handling mechanism, goods from a shelf to the storage mechanism or from the storage mechanism to a shelf, where the goods do not rotate during a process of being transferred from the shelf to the storage mechanism or from the storage mechanism to the shelf.

In the second aspect, the present disclosure provides a goods handling method based on goods handling device, where the goods handling device includes a handling mechanism and a storage mechanism, where the handling mechanism transfers the goods to the storage mechanism, and the storage mechanism includes storage spaces; and the goods handling method includes: determining one of the storage spaces corresponding to the attribute of the goods for storing the goods based on the attribute of the goods; and controlling the handling mechanism to transfer the goods to the storage space corresponding to the attribute.

In the third aspect, the present disclosure provides a goods handling device including a handling mechanism and a storage mechanism, where the storage mechanism includes a storage space; and the handling mechanism can translate the goods between the shelf and the storage space.

In the fourth aspect, the present disclosure provides a warehousing system including shelves and a goods handling device, where the warehousing system applies the goods handling method mentioned in the first or second aspect above; and the shelves are used for storing goods, and the goods handling device can be docked with one of the shelves to pick up and place the goods.

### BRIEF DESCRIPTION OF DRAWINGS

The accompanying drawings illustrated herein are used to provide further understanding of the present disclosure and form a part of the present disclosure. The exemplary embodiments and descriptions of the present disclosure are used to explain the present disclosure, and do not constitute an improper limitation of the present disclosure.
FIGs. 1 to 3 are schematic structural diagrams of goods handling devices according to embodiments of the present disclosure.
FIG. 4 is a top view of a goods handling device according to embodiments of the present disclosure.
FIGs. 5 and 6 are schematic structural diagrams of handling mechanisms in goods handling devices according to embodiments of the present disclosure.
FIGs. 7 to 9 are schematic structural diagrams of pickup devices in goods handling devices according to embodiments of the present disclosure.
FIG. 10 is a schematic structural diagram of a storage mechanism in a goods handling device according to embodiments of the present disclosure.
FIGs. 11 and 12 are flowcharts of goods handling methods according to embodiments of the present disclosure.
FIGs. 13 to 15 are schematic structural diagrams of goods handling devices according to embodiments of the present disclosure.
FIG. 16 is a schematic structural diagram of a handling mechanism in a goods handling device according to embodiments of the present disclosure.

Reference signs on the accompanying drawings are:
100- Handling mechanism, 110- Pickup device, 111- Pickup part, 1111- Main part, 1112-Suction part, 112- First driving component, 1121- First driving motor, 1122- First lead screw, 1123- First guide rail, 113- Second driving component, 1131- Second driving motor, 1132- Second lead screw, 1133- Second guide rail, 120- First conveying device, 121- First transmission part, 122- Second transmission part, 123- First conveying part, 1231- First roller group, 1232- Second roller group, 130- Mounting bracket, 200- Storage mechanism, 210- storage space, 220- Second conveying device, 221- Third transmission part, 222- Second conveying part, 2221- Conveyor belt, 2222- First transmission shaft, 2223- Second transmission shaft, 230- Shelf body, 231-Stopping part, 201- First storage shelf, 202- Second storage shelf, 300- attribute detecting device, 400- Shelf, 500- Base.

### DETAILED DESCRIPTION

In order to present the purposes, technical solutions and advantages of the present disclosure clearer, the technical solutions of the present disclosure will be clearly and completely described below in conjunction with specific embodiments and corresponding drawings of the present disclosure. The described embodiments are only a part of the embodiments of the present disclosure, not all of them. Other embodiments achieved by those skilled in the art according to the embodiments in the present disclosure without paying creative work shall all fall within the scope of protection of the present disclosure.

Regarding the first aspect, in related arts, after the handling mechanism picks up the goods from the shelf, the handling mechanism clamps one end of the goods. Therefore, the handling mechanism needs to turn the end of the goods away from the clamp of the handling mechanism towards the storage space of the storage mechanism, which requires rotating the goods, turns the end of the goods away from the handling mechanism towards the storage space of the storage mechanism, and then conveys the goods to the storage space for storage.

However, in order to prevent interference or collision between the goods and the storage mechanism during rotation, the distance between the handling mechanism and the storage mechanism needs to be set relatively large, resulting in a larger overall volume of the goods handling device.

In view of this, the present disclosure provides a goods handling method based on a goods handling device. The following, in conjunction with the accompanying drawings, provides a detailed explanation of the technical solutions disclosed in each embodiment of the present disclosure.

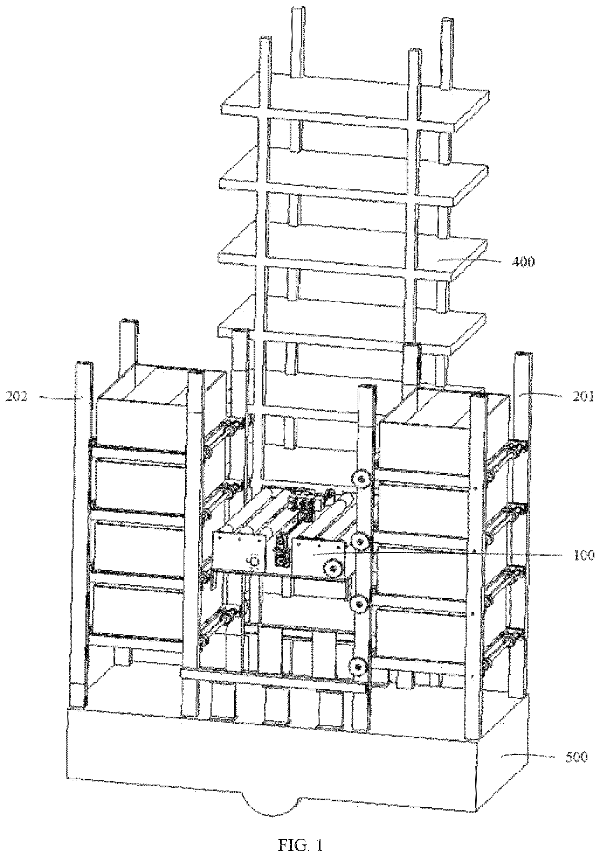

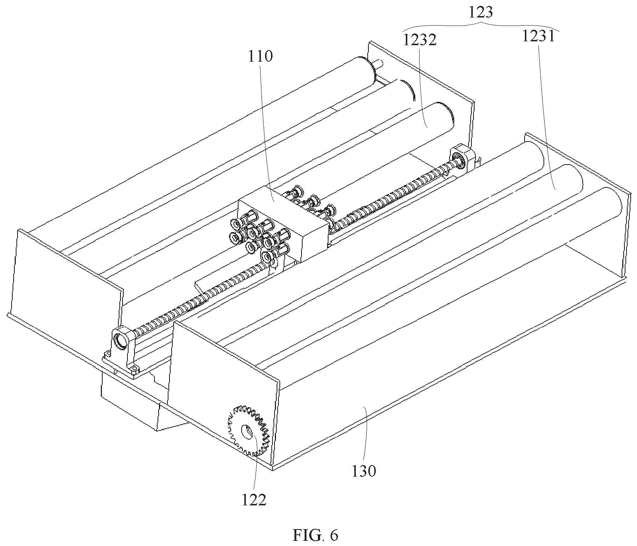

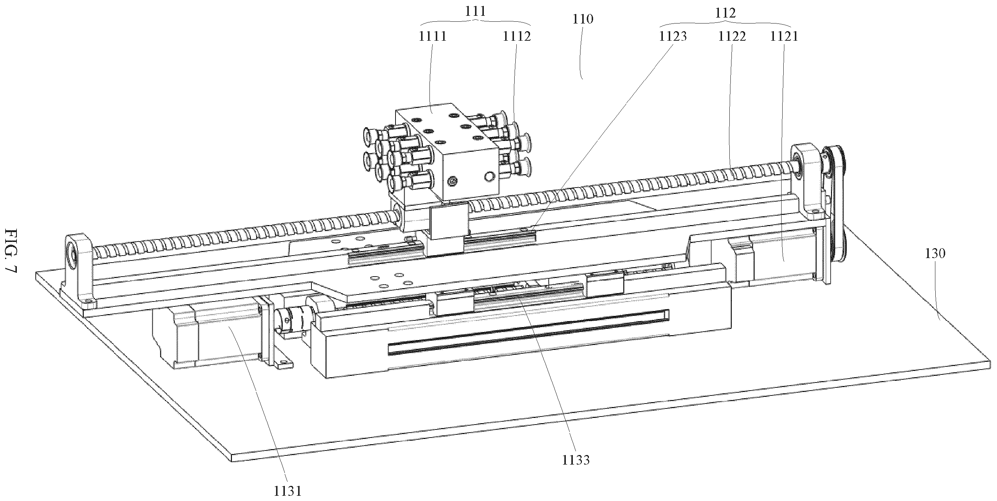

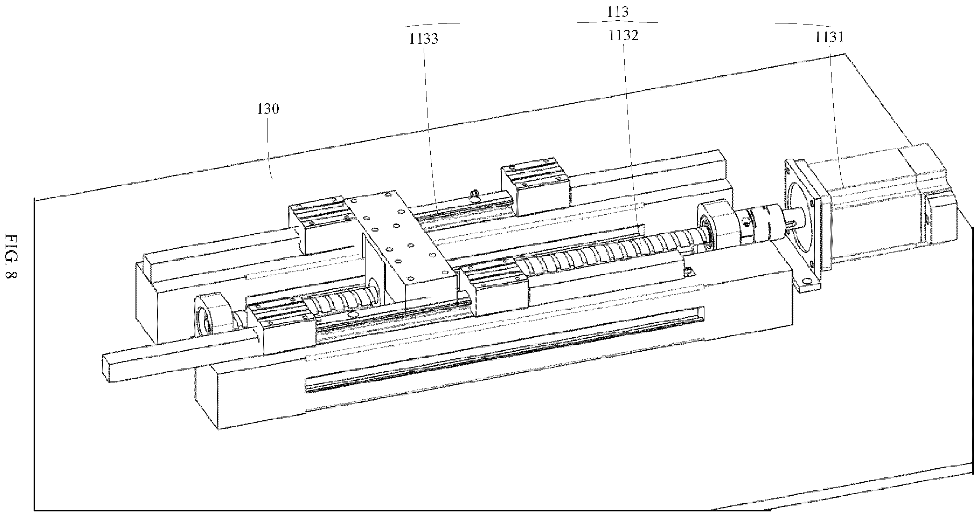

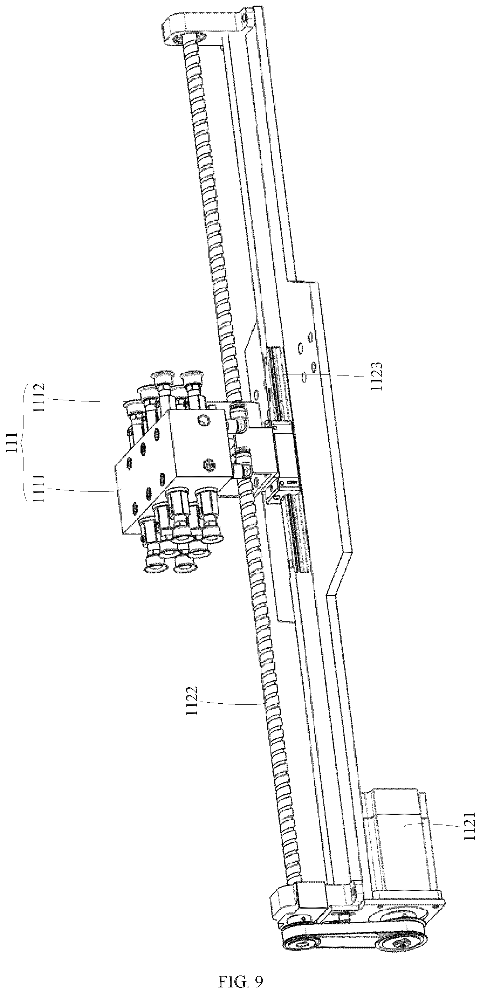

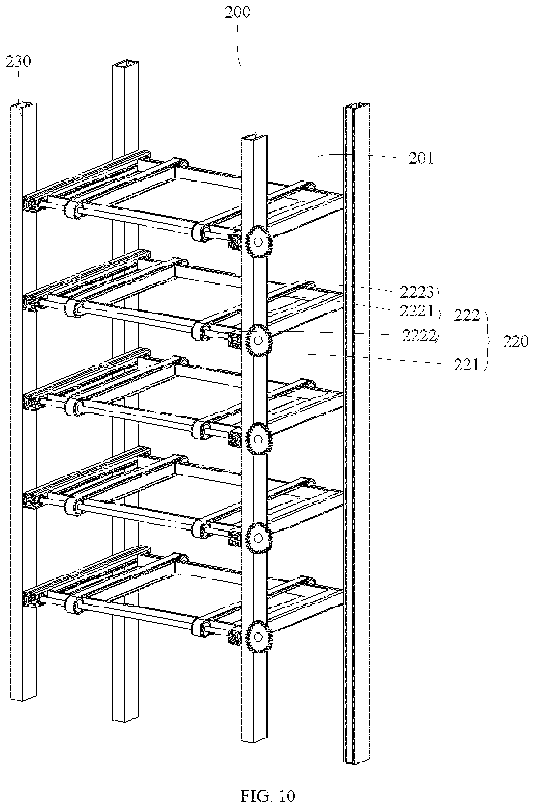

As shown in FIGs. 1 to 10, embodiments of the present disclosure provide a goods handling method based on a goods handling device. The goods handling method is applied to a goods handling device. The goods handling device can replace manual transferring of goods, thereby reducing manual labor intensity and improving goods storing efficiency. The goods handling device includes a handling mechanism 100, a conveying device, and a storage mechanism 200. The handling mechanism 100 includes a pickup device 110, where the pickup device 110 is used for transferring goods such that the goods can be transferred between the conveying device and the shelf 400. The transmission direction of the conveying device intersects with the moving direction of the pickup device 110. The storage mechanism 200 has a storage space 210 for storing the goods, such that the goods can be transferred between the conveying device and the storage mechanism 200.

The goods handling method according to embodiments of the present disclosure specifically includes:
transferring, by the handling mechanism 100, goods from the shelf 400 to the storage mechanism 200 or from the storage mechanism 200 to the shelf 400, where the goods do not rotate during a process of being transferred from the shelf 400 to the storage mechanism 200 or from the storage mechanism 200 to the shelf 400.

In embodiments of the present disclosure, since the goods do not rotate and the conveying path of the goods is relatively short, the space occupied by the rotation and conveying path of the goods is saved, and the goods handling device does not need to avoid the goods. The handling mechanism 100 and the storage mechanism 200 can be set closer, making the volume of the goods handling device smaller.

In addition, since the goods do not rotate, the space required for transferring the goods by the handling mechanism 100 is also relatively small, thus further reducing the volume of the goods handling device. In addition, the volume of the goods handling device in the present disclosure can be set to be relatively small, thereby reducing the required space of the passage for transferring goods and reducing the passage space of the warehousing system, thereby improving the space utilization rate of the warehousing system and reducing storage costs.

In another embodiment, the handling mechanism 100 may include a pickup device 110 and a conveying device, and the storage mechanism 200 may have a storage space 210.

During the pickup process, step S100 is executed, and the handling mechanism 100 transfers the goods from the shelf to the storage mechanism 200, and S100 specifically includes:
controlling the movement of the pickup device 110 such that the pickup device 110 translates the goods from the shelf 400 to the conveying device. In this step, the pickup device 110 moves forward to pick up the goods from the shelf 400, and then the goods are translated to the conveying device. At this time, the goods on the pickup device 110 are transferred to the conveying device.

The conveying device is controlled to translate the goods to place the goods at storage space 210. When executing this step, the conveying device drives the goods carried on the conveying device to move towards the storage space 210. When the goods moves to the storage space 210, the goods are stored at the storage space 210.

During the putdown process, step S200 is executed to transport the goods from the storage mechanism 200 to the shelf 400, S200 specifically includes:
controlling the conveying device to pick up the goods from the storage space 210. At this point, the conveying device retrieves the goods stored at the storage space 210. That is, the conveying device can drive the goods carried on the conveying device to move away from the storage space 210. At this time, the conveying device picks up the goods from the storage space 210 and transfers the goods to the pickup position for the pickup device 110 at the conveying device.

The movement of the pickup device 110 is controlled to enable the pickup device 110 to translate the goods from the conveying device to the shelf 400. At this time, the retrieved goods are transferred, by the pickup device 110, from the conveying device to the shelf 400.

Where the pickup device 110 and the conveying device 120 do not rotate during a process of transferring the goods. At this time, the pickup device 110 and the conveying device only perform translational transferring, and the pickup device 110 and the conveying device do not rotate.

In this solution, the pickup device 110 and the conveying device do not rotate during the process of putting down and picking up the goods, so the installation space of the pickup device 110 and the conveying device can be set smaller, further reducing the volume of the goods handling device.

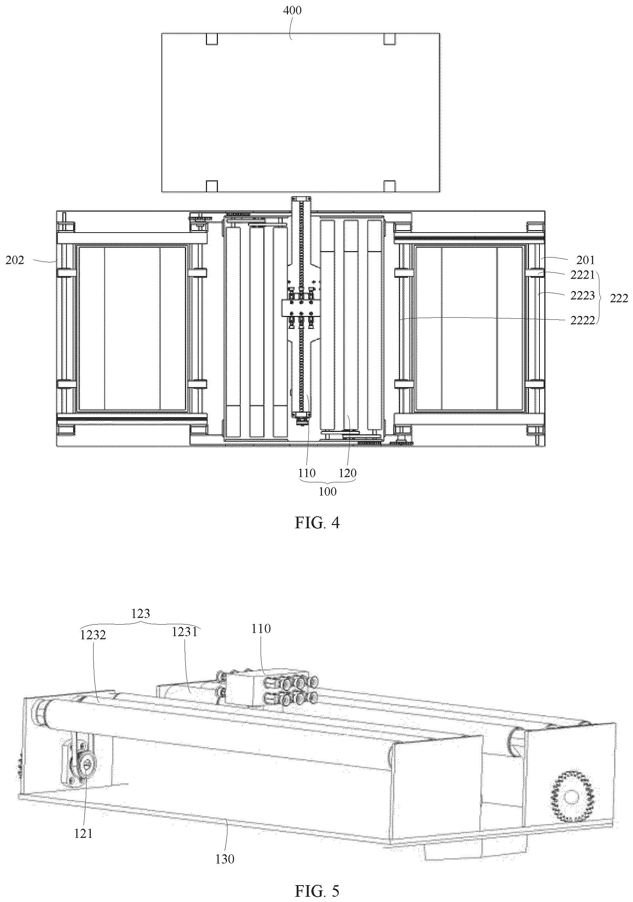

The handling mechanism 100 in the above embodiment can adopt the structure shown in FIG. 5, and the pickup device 110 can adopt a suction-cup-type pickup device 110. The driving component drives the suction cup to move, thereby driving the suction cup to grasp the goods. The component that drives the suction cup to move includes but is not limited to a driving motor, a lead screw, or a guide rail, etc. The driving component that drives the suction cup to move can also be other structures, which is not limited in the present disclosure. Of course, the pickup device 110 is not limited to using suction cups, and can also use hooks, magnetic suction, claws, and other methods to pick up the goods.

The conveying device in the above embodiments can be a conveyor belt conveying device, a roller conveying device, or a chain conveying device. The goods can be carried on the conveyor belt, roller, or chain during transportation.

In another embodiment, before executing S100 or S200, the method further includes:
S300, receiving a control command; and determining a transferring mode for the goods according to the control command.

A pickup command or a putdown command can be input to the goods handling device. When the input command is a pickup command, the goods handling device receives the pickup command, such that the goods handling device picks up the goods from shelf 400. At this time, the operation mode of the goods handling device is the pickup mode. When the input command is a putdown command, the goods handling device receives the putdown command, such that the goods handling device puts the goods on the shelf 400. At this time, the operation mode of the goods handling device is the putdown mode.

If the transferring mode is the pickup mode, S100 specifically includes S110-S130.

In S110, the pickup device 110 is controlled to move in a first direction to a first position; when the pickup device 110 is at the first position, the pickup device 110 picks up the goods from the shelf 400.

This step is the process of the pickup device picking up the goods from the shelf. The pickup device is moved forward to a designated pickup position, which is the first position here. The first position can be flexibly adjusted according to the distance of the goods handling device from the shelf 400 and the storage space of the goods on the shelf 400.

In S120, the pickup device 110 is controlled to move in a second direction to a second position, to translate the goods to a first target position of the conveying device.

At this time, after the pickup device picks up the goods, the pickup device moves away from the shelf 400, that is, in the opposite direction to when picking up the goods. The second position here is where the pickup device 110 transfers the goods to the conveying device. The pickup device 110 retrieves goods from the shelf 400 and transfers the goods to the conveying device 120 to prepare for the transportation of the goods to the storage space 210.

In S130, the conveying device is controlled to translate the goods in the third direction from the first target position to the second target position, to place the goods at the storage space 210.

This step is to transport the goods placed at the first target position of the conveying device, to transport the goods at the first target position to the storage space 210. When the goods are transferred to the storage space 210, the goods are placed in the storage space 210 for storage.

If the transferring mode is the putdown mode; S200 specifically includes S210 to S220.

In S210, the conveying device is controlled to translate the goods in a fourth direction from the second target position to the first target position.

At this point, the goods stored at storage space 210 are retrieved and moved to the position where the pickup device 110 can pick the goods up on the conveying device, which is the first target position here.

In S220, the pickup device 110 is controlled to pick up the goods at the second position and move in the first direction to the first position, to translate the goods to the shelf 400.

Where the first direction and the second direction are parallel and opposite, and the third direction and the fourth direction are parallel and opposite.

This solution can execute corresponding steps according to different goods handling modes, which can avoid the problem of goods backlog caused by chaotic execution steps during the goods handling process.

In the above embodiment, the pickup device 110 translates the goods to the first target position of the conveying device, the pickup device 110 is separated from the goods, and the goods are transferred onto the conveying device. During the process of conveying the goods by the conveying device, the pick-up device 110 is close to the goods, which can easily cause friction between the pick-up device 110 and the conveying device, resulting in a deviation in the transferring direction of the goods and causing the goods to fall off the conveying device.

In another embodiment, after S120, the method may further include S140-S150.

In S140, the pickup device 110 and the goods are separated.

When the pickup device 110 transfers the goods to the first target position, the pickup device 110 separates from the goods, allowing the goods to be transferred onto the conveying device. For example, the pick-up device 110 may desorb from the goods, or the pick-up device 110 may release the clamped goods.

In S150, the pickup device 110 is moved in the second direction to the third position.

At this point, the pickup device 110 continues to move in the second direction, such that the pickup device 110 moves away from the goods. The distance between the pickup device 110 and the goods is relatively far, therefore during the process of conveying the goods by the conveying device, the pickup device 110 is less likely to interfere or rub with the goods, and is less likely to cause the conveying direction of the goods to deviate, which can prevent the goods from falling off the conveying device and improve the safety of the goods handling.

In the putdown mode, after step S210, the method may further include S230-S240.

In S230, the pickup device 110 is moved in the first direction from the third position to the second position.

At this point, the pickup device 110 is moved from the third position towards the shelf 400 and to the second position, where the second position is where the pickup device 110 and the conveying device transfer the goods. That is, when the pickup device 110 separates from the goods, the pickup device 110 is at the second position, and the pickup device 110 also picks up the goods in the second position.

In S240, the pickup device 110 can pick up the goods at the second position.

When the pickup device 110 is in the second position, the pickup device 110 is close to the goods and can perform operations such as clamping and adsorption on the goods.

In another embodiment, the conveying device may include a first conveying device 120 and a second conveying device 220, both of which can translate the goods in the third or fourth direction, and the second conveying device 220 may be set at the storage space 210.

If the transferring mode is the pickup mode, S130 includes S131-S132.

In S131, the pickup device 110 is controlled to move in a second direction to a second position, to translate the goods to a first target position of the first conveying device 120.

The second direction here is the moving direction away from shelf 400. The pickup device 110 needs to get the goods from shelf 400, so the pickup device 110 needs to move towards the direction away from shelf 400 to move away from shelf 400 and take out the goods. In some embodiments, the first target position can be the middle position of the first conveying device 120, or can be any other position of the first conveying device 120, which is not limited in the present disclosure.

In S132, the first conveying device 120 is controlled to translate the goods in a third direction; the goods are received, by the second conveying device 220, from the first conveying device 120; and the goods are translated, by the second conveying device 220, in the third direction to a second target position to place the goods in the storage space 210.

The first conveying device 120 and the second conveying device 220 are started, to convey the goods from the first target position of the first conveying device 120 to the edge of the second conveying device 220. A part of the goods can be lapped on the second conveying device 220, and the second conveying device 220 receives the goods. At this time, the goods are transferred from the first conveying device 120 to the second conveying device 220, and the second conveying device 220 continues to move and transport the goods to the second target position to store the goods in the storage space 210. In some embodiments, the second target position may be the middle position of the second conveying device 220, which can also be other positions of the second conveying device 220, which is not limited in the present disclosure.

If the transferring mode is the goods putdown mode, S210 includes:

controlling the second conveying device 220 to translate the goods in a fourth direction; receiving, by the first conveying device 120, the goods from the second conveying device 220; and translating, by the first conveying device 120, the goods in the fourth direction to the first target position.

During the putdown process, the first conveying device 120 and the second conveying device 220 are activated to convey the goods from the second target position of the second conveying device 220 to the edge of the first conveying device 120. The goods can be partially lapped on the first conveying device 120. At this time, the goods are transferred from the second conveying device 220 to the first conveying device 120, and the first conveying device 120 continues to move and transfer the goods to the first target position. At this time, due to the conveying function of the storage mechanism 200, during the putdown process, the second conveying device 220 is reversed to transport the goods to the first conveying device 120, and the first conveying device 120 also reverses to receive the goods and transport the goods to the first target position, which is the position where the pickup device 110 can grasp the goods. The reverse rotation of the first conveying device 120 and the second conveying device 220 mentioned above is relative to the rotation direction of the first conveying device 120 and the second conveying device 220 during the pickup process of the storage group on the same side.

In the above embodiment, the goods are transferred between the first conveying device 120 and the second conveying device 220 for mutual translation. The second conveying device 220 here is used not only for the storage mechanism 200 to receive the goods conveyed by the handling mechanism 100, or for conveying the goods to the handling mechanism 100, but also for supporting the goods. That is, when the goods are stored in the storage space 210 of the storage mechanism 200, the goods are actually placed on the second conveying device 220, which means that the storage mechanism 200 itself has a conveying function.

In the embodiments of the present disclosure, the storage mechanism 200 has conveying capability, so there is no need for manual intervention in the transferring, which improves the transferring efficiency of the goods handling device. In addition, the pickup device 110 is responsible for grasping the goods, and the first conveying device 120 and the second conveying device 220 are responsible for translating the goods. Therefore, during the pickup and putdown processes, the goods do not need to rotate, and the conveying path of the goods is relatively short, thus saving the space occupied by the rotation and conveying path of the goods, and making it unnecessary for the goods to avoid the composition structure of the goods handling device, resulting in a smaller volume of the goods handling device. At the same time, due to the small volume of the goods handling device, the required passage space for transporting the goods is relatively small, which can reduce the passage space of the warehousing system, thereby improving the space utilization rate of the warehousing system and reducing storage costs.

In the above embodiment, the conveying direction of the first conveying device 120 may be parallel to the moving direction of the pickup device 110. That is, the first direction, second direction, third direction, and fourth direction are parallel to each other. At this time, the shelf 400 and the storage mechanism 200 can be placed on both sides of the first conveying device 120, that is, the pickup device 110 moves forward towards the shelf and picks up the goods, and the first conveying device 120 transfers the goods to the storage mechanism 200 backward. At this point, after the pickup device 110 takes out the goods from the shelf 400, the pickup device 110 needs to be lowered below the first conveying device 120 to make space for the rear position and allow the goods to be transferred backwards. The pickup device 110 of this solution requires lifting and lowering adjustment, so the structure is relatively complex.

In another embodiment, the first and second directions may intersect with the third and fourth directions. In this solution, the conveying direction of the first conveying device 120 intersects with the moving direction of the pickup device 110. Therefore, the storage mechanism 200 can be located on the left or right side of the shelf 400. When the pickup device 110 picks up the goods forward or backward, the first conveying device 120 transmits the goods to the right or left side. Therefore, the pickup device 110 does not need to be avoided, and there is no need to lift or lower the pickup device 110, making the structure of the handling mechanism 100 relatively simple.

In another embodiment, the number of storage spaces 210 can be multiple, and multiple storage spaces 210 can be arranged at intervals along the vertical direction, with each storage space 210 corresponding to one second conveying device 220. The goods handling device may also include a lifting mechanism.

Before S131 or S210, the method may also include S400.

In S400, the lifting mechanism is controlled to lift or lower the first conveying device 120 and the pickup device 110, to dock the first conveying device 120 with the second conveying device 220 corresponding to one storage space 210.

In this solution, the number of storage spaces 210 can be multiple, thereby increasing the capacity of the goods handling device and enabling the goods handling device to simultaneously transfer more goods, improving the transferring efficiency of the goods handling device.

In the above embodiment, during the pickup process, when the pickup device 110 picks up the goods to move the goods from the shelf 400 to the second target position of the first conveying device 120, the handling mechanism 100 is lifted or lowered to find the storage space 210 for storing the goods. For example, the first conveying device 120 is raised to a height that is level with or slightly higher than the storage space 210 where the goods are to be stored, to dock the first conveying device 120 with the second conveying device 220. Then, the goods are conveyed and stored in the storage space 210. During the putdown process, the handling mechanism 100 is lifted or lowered to adjust the first conveying device 110 to a height that is level with or slightly lower than the storage space 210 where the goods are to be released, and then transfers the goods from the storage space to the first conveying device 120. Then, the handling mechanism 100 is lifted or lowered to a height that is level or slightly higher than the position of the shelf 400 where the goods are to be stored.

In order to improve storage capacity, the shelf 400 is usually arranged with multiple storage places along the vertical direction, and multiple storage places can be arranged at intervals along the vertical direction. In this solution, the pickup and releasing positions of the handling mechanism 100 are fixed, and the handling mechanism 100 is opposite to the inlet and outlet of the shelf 400. The inlet and outlet here can be a storage place of the shelf 400. During the pickup process, the goods can be manually or by other method transferred to the position of the inlet and outlet of shelf 400, and then the goods are picked up by the handling mechanism 100. After the handling mechanism 100 finishes picking up the goods, the next goods can be manually or by other method transferred to the inlet and outlet. During the process of putdown the goods, manual or other external forces sequentially transfer the goods at the inlet and outlet to the storage place of the shelf 400. In the above embodiments, external force and manual assistance are required for picking up and putting down the goods, making the operation difficult.

In another embodiment, prior to S110, the method may further include S500.

In S500, the lifting mechanism is controlled to lift or lower the first conveying device 120 and the pickup device 110 to a position corresponding to one of the plurality of storage places.

In this solution, the lifting mechanism can lift or lower the handling mechanism 100, such that the handling mechanism 100 can correspond to different storage places of the shelf 400. Therefore, it is possible to pick up or put down goods from different storage places of the shelf 400, thereby reducing the difficulty of goods handling.

In the above embodiment, during the pickup process, the handling mechanism 100 is first lifted or lowered to a position corresponding to the storage place where the goods are to be picked up by the lifting mechanism. Then, the goods on the storage place is taken out by the pickup device 110, and the handling mechanism 100 is lifted or lowered to the position corresponding to the storage space 210 by the lifting mechanism. Finally, the goods are transferred from the first target position to the second target position.

During the putdown process, the goods on storage space 210 is first transferred from the second target position to the first target position, and then the handling mechanism 100 is lifted or lowered to the corresponding position in one of the storage places through the lifting mechanism. Then the goods are moved from the first target position to the storage place through the pickup device 110.

In some embodiments, the lifting mechanism can be a chain fall (also known as a hand chain hoist, manual hoist, hoist, or chain hoist), or a combination of a pulley and a chain. The lifting mechanism can also be of other structures, which are not limited in the present disclosure.

Since the storage places of shelf 400 and the storage spaces 210 can both be multiple, there are various control logics during the process of picking up and putting down the goods. For example, during the pickup process, the goods can be picked up from the bottom storage place to the top storage place of shelf 400 in sequence, and then the goods can be put down from the bottom storage space to the top storage space 210 of storage mechanism 200 in sequence. At this point, the storage mechanism 200 stores goods in sequence from bottom to top.

In order to reduce the lifting or lowering frequency of the handling mechanism 100 and improve the efficiency of goods handling, in another embodiment, the conveying directions of the first conveying device 120 and the second conveying device 220 can both be horizontal, and the storage space 210 corresponds to the storage place in the horizontal direction. At this point, the storage place of shelf 400 and the storage space 210 of the storage mechanism 200 on the same side can be at the same height. During the process of transporting the goods from the shelf 400 to the storage mechanism 200 or from the storage mechanism 200 to the shelf 400 by the handling mechanism 100, the goods can be transferred between the storage space 210 and the storage place at the same height.

In this solution, the storage space 210 and the storage place on the same layer are at the same height, making it more convenient for the goods to be transferred. At this time, there is no need for lifting or lowering the handling mechanism 100 to transfer the goods between the storage place and the storage space 210 on the same layer. Therefore, it can improve the efficiency of goods handling.

In order to further improve the storage capacity of the goods handling device, in another embodiment, the storage mechanism 200 may include a first storage shelf 201 and a second storage shelf 202, both of which may include multiple storage spaces 210 that are arranged at intervals in the vertical direction. The first storage shelf 201 and the second storage shelf 202 may be arranged on both sides of the first conveying device 120.

In the pickup process, S130 may include:
transferring, by the first conveying device 120, the goods from the first target position to a second conveying device 220 of one storage space 210 in the first storage shelf 201 or the second storage shelf 202, and translating, by the second conveying device 220, the goods to the second target position to place the goods in the storage space 210.

In the process of releasing goods, S210 may include:
translating, by the second conveying device 220 of the storage space 210 of the first storage shelf 201 or the second storage shelf 202, the goods from the second target position to the first conveying device 120.

This solution further increases the storage spaces 210 of the storage mechanism 200, thereby further improving the storage and transferring capacity of the goods handling device and further enhancing the transferring efficiency.

In the above embodiment, the heights of the storage spaces 210 on the same layer of the first storage shelf 201 and the second storage shelf 202 can be the same. In this case, if there is a misoperation, goods that should have been transferred to the first storage shelf 201 may easily be transferred to the second storage shelf 202, or the goods that should have been transferred to the second storage shelf 202 may easily be transferred to the first storage shelf 201, causing confusion in the storage of goods.

Therefore, in another embodiment, the storage spaces 210 on the same layer of the first storage shelf 201 and the second storage shelf 202 can be arranged in a staggered manner. In some embodiments, one storage space 210 in the first storage shelf 201 has a different height from a corresponding storage space 210 (e.g., on the same layer with the storage space 210 in the first storage shelf 201) in the second storage shelf 202.

In this solution, when a misoperation occurs, due to the staggered arrangement of storage spaces 210 on the same layer of the first storage shelf 201 and the second storage shelf 202, the goods that should have been transferred to the first storage shelf 201 are blocked by the second storage shelf 202 when the goods are transferred to the second storage shelf 202, and will not enter the second storage shelf 202, thus improving the safety and reliability of goods handling.

In an embodiment, the storage space 210 may be provided with a first position detecting component, which may be located on the side of the storage space 210 away from the first conveying device 120.

S130 can further include:
during a process of translating the goods from the first target position to the second target position, in response to determining that the first position detecting component is triggered, stopping the second conveying device 220, to place the goods in the storage space 210.

In this solution, when the first position detecting component is in the triggered state, the second conveying device 220 stops transferring, thereby avoiding the second conveying device 220 from continuing to transfer the goods and avoiding the risk of goods falling from the storage space 210, further improving the reliability and safety of the goods handling device.

In some embodiments, the first position detecting component 242 can be a photoelectric sensor. When the light source of the photoelectric sensor is blocked by the goods, the photoelectric sensor is triggered, thereby emitting an alarm signal to indicate that the goods has deviated from the preset position and there is a risk of falling. Therefore, it is necessary to immediately stop continuing to transport the goods in the third direction. The first position detecting component can also be a structure such as a contact switch, pressure sensor, etc. The specific type of the first position detecting component is not limited in the present disclosure.

In another embodiment, the storage space 210 is further provided with a second position detecting component, the first position detecting component and the second position detecting component are arranged at intervals along the third direction, and the second target position is located between the first position detecting component and the second position detecting component. The second position detecting component here is located on the side close to the first conveying device 120. Therefore, during the process of transferring goods from the first conveying device 120 to the second conveying device 220, the second position detecting component will be triggered. When the goods move to the second target position, the trigger of the second position detecting component is released, which also indicates that the goods have been transferred to the designated position.

S130 can further include:
in response to determining that the second position detecting component is triggered, starting the second conveying device 220 to receive the goods from the first conveying device 120; and
in response to determining that the second position detecting component is released from triggering or the first position detecting component is triggered, stopping the second conveying device 220, to place the goods at the storage space 210.

It should be noted that if any one of the above conditions occur, the second conveying device 220 will stop.

During the specific process, the goods are transferred by the first conveying device 120 to the edge of the first conveying device 120, and the second position detecting component is triggered. At this time, the second conveying device 220 is activated to receive the goods. During the process of transferring the goods from the first conveying device 120 to the second conveying device 220, the second position detecting component remains in a triggered state. The triggering of the second position detecting component is released, indicating that the goods has been transferred to the designated position, causing the second conveying device 220 to stop, for example, the driving source of the second conveying device 220 is powered off or the driving shaft is locked. Of course, there are other ways to stop the second conveying device 220, which are not limited in the present disclosure.

In the above embodiment, the first position detecting component detects at the rear end of the second conveying device 220 to prevent the goods from falling out from the rear end of the second conveying device 220. The second position detecting component detects at the front end of the second conveying device 220 to ensure that the goods has entered and can be located at the predetermined position. When a malfunction occurs in one of the detecting components, the other detecting component can still stop the second conveying device, thus adding a double protection mechanism for goods transportation and further improving the safety performance of goods transportation.

In addition, the second position detecting component can also record the number of times indicating that goods enter and exit the storage space 210, thereby being able to record the status of the storage space 210 and avoiding duplicate putdown and pickup at the storage space 210.

In some embodiments, the structure of the second position detecting component is the same as that of the first position detecting component, which is not limited in the present disclosure.

In the above embodiment, the first conveying device 120 and the second conveying device 220 are driven separately. At this time, the first conveying device 120 and the second conveying device 220 can have independent driving sources, resulting in a high energy consumption of the goods handling device.

Based on this, in another embodiment, the first conveying device 120 may include a driving source, a first transmission part 121, a second transmission part 122, and a first conveying part 123. The driving source may be connected to the first conveying part 123 through the first transmission part 121, and the first transmission part 121 may cooperate with the second transmission part 122. The second conveying device 220 may include a third transmission part 221 and a second conveying part 222, and the third transmission part 221 cooperates with the second conveying part 222.

In a case that the first conveying device 120 is docked with the second conveying device 220, the second transmission part 122 is cooperated with the third transmission part 221, such that the second transmission part 122 drives the second conveying part 222 through the third transmission part 221.

In this solution, the conveying paths of the driving source include two, one conveying path is driven by the driving source to rotate the first conveying part 123 through the first transmission part 121, and the other conveying path is driven by the driving source to rotate the second conveying part 222 through the first transmission part 121, the second transmission part 122, and the third transmission part 221. At this time, the driving source can simultaneously drive the first conveying part 123 and the second conveying part 222 to transfer the goods, thereby enabling the first conveying device 120 and the second conveying device 220 to share the driving source, simplifying the structure and operation of the goods handling device, and reducing the energy consumption of the goods handling device.

In some embodiments, the first conveying part 123 can be a roller group, which includes multiple rollers arranged at intervals. The first transmission part 121 includes a driving wheel, a driven wheel, and a conveyor belt. The driving source is connected to the driving wheel, and the driven wheel is connected to one of the rollers. The driving source drives the driving wheel to rotate, and the driving wheel drives the driven wheel to rotate through a conveyor belt. The driven wheel drives one of the rollers to rotate. The adjacent two rollers can be connected by a belt or chain, such that all the rollers in the roller group rotate.

The second transmission part 122 and the third transmission part 221 can both be gear sets, and the second conveying part 222 can be a conveyor belt mechanism, a chain transmission mechanism, or of course, a roller transmission mechanism, which is not limited in the present disclosure. The second transmission part 122 is coaxially arranged with the driving wheel. The driving wheel drives the second transmission part 122 to rotate, and the second transmission part 122 drives the third transmission part 221 to rotate, thereby driving the second conveying part 222 to rotate.

The second transmission part 122 and the third transmission part 221 can also be a combination of a gear set and groove wheels, with the groove wheel on the second transmission part 122 cooperating with the groove wheel on the third transmission part 221. Of course, the first conveying device 120 and the second conveying device 220 mentioned above can also have other structures, which are not limited in the present disclosure.

In an embodiment, the goods handling device may further include a walking mechanism, and both the handling mechanism 100 and the storage mechanism 200 are provided on the walking mechanism. The above method also includes:
moving, by the walking mechanism, the goods handling device to a position where the pickup device 110 being opposite to the shelf 400.

The position where the pickup device 110 being opposite to the shelf 400 refers to the position where the pickup device 110 can pick up the goods from the storage place of the shelf 400 or put down the goods on the storage place of the shelf 400. Specifically, the position where the pickup device 110 being opposite to the shelf 400 refers to a position where the pickup device 110 is opposite one of the storage places of the shelf 400 and is aligned with the goods to be picked up.

In this solution, the walking mechanism drives the handling mechanism 100 and the storage mechanism 200 to move, making it easier for the goods handling device to carry out goods handling, reducing manual intervention in goods handling, and thus reducing the labor intensity of operators.

At this point, the walking mechanism can be an Automated Guided Vehicle (AGV) or a universal wheel mechanism. Of course, the walking mechanism can also be of other structures, which are not limited in the present disclosure.

In another embodiment, the goods handling device further includes a track, and both the handling mechanism 100 and the storage mechanism 200 can be set on the track. The above method further includes:
moving the goods handling device along the track to a position where the pickup device 110 is opposite to the shelf 400.

The handling mechanism 100 and the storage mechanism 200 slidably cooperate with the track, and can move along the extension direction of the track. The track can be laid on the ground of the passage, and the goods handling device can move along the extension direction of the track, making it difficult for the goods handling device to deviate from its travel route during the movement.

In some embodiments, the goods handling device can also include a base 500, and both the handling mechanism 100 and the storage mechanism 200 can be installed on the base 500. The base 500 can be installed on a walking mechanism, which can drive the base 500 to move. Alternatively, the base 500 can slide along the extension direction of the track.

In order to improve the grasping accuracy for the goods, in another embodiment, the goods handling device may further include a goods positioning device, which is used to determine the position information of the goods on the shelf 400. After the handling mechanism or the track moves the goods handling device to the position where the pickup device 110 is opposite to the shelf 400, the method may also include:
determining, by the goods positioning device, position information of the goods on the shelf.

Controlling the pickup device 110 to pick up the goods specifically includes:

Controlling the pickup device 110 to pick up the goods according to the position information.

In this solution, by identifying the position information of the goods on the shelf 400 to locate the goods and then grabbing the goods, the grabbing accuracy of the goods can be improved to prevent the goods from falling off the pickup device 110. The position information obtained here may include the storage place of the goods on the shelf and the distance between the pickup device 110 and the goods.

In some embodiments, the positioning device can be the camera module. The camera module takes photos of the locations of the goods to perform positioning, such that the position information of the goods can be determined based on the photos. Alternatively, the positioning device can also be a laser positioning device, and the laser positioning device locates the position of the goods. Of course, other components can also be used to obtain the position information of the goods, which is not limited in the present disclosure.

Based on the goods handling method according to embodiments of the present disclosure, embodiments of the present disclosure further provide a warehousing system that can apply any of the goods handling methods described in the previous embodiments.

The warehousing system disclosed by the present disclosure includes shelves 400 and the goods handling device. The shelf 400 is used for storing goods, and the goods handling device can be docked with the shelf 400 to retrieve and store goods.

In the warehousing system of the present disclosure, since the goods do not rotate and the conveying path of the goods is relatively short, the space occupied by the rotation and conveying path of the goods is saved, and the goods handling device does not need to avoid the goods. The handling mechanism and the storage mechanism can be set closer, making the volume of the goods handling device smaller. In addition, the goods handling device does not need to avoid the goods, so there is no need to reserve a large space inside the goods handling device for rotating the goods, which further makes the volume of the goods handling device smaller.

In another embodiment, there may be a passage between adjacent shelves 400 for the goods handling device to pass through.

The storage mechanism 200 can include a first storage shelf 201 and a second storage shelf 202, where the first storage shelf 201 and the second storage shelf 202 can be arranged on both sides of the handling mechanism 100, and a moving direction of the goods handling device in the passage is a direction along a line connecting centers of the first storage shelf 201 and the second storage shelf 202.

In this solution, the first storage shelf 201 and the second storage shelf 202 are located on both sides of the handling mechanism 100. Therefore, the direction of the line connecting the centers of the first storage shelf 201 and the second storage shelf 202 can be the direction of the larger size of the goods handling device, i.e., the length direction of the goods handling device. Therefore, the goods handling device moves in the direction of the larger size of the goods handling device, such that the size of the reserved passage between adjacent shelves 400 can be smaller, thereby reducing the required passage space for transporting goods, which can reduce the space of the passage in the warehousing system, improve the space utilization rate of the warehousing system, and reduce storage costs.

In the above embodiment, the distance between adjacent shelves 400 needs to be greater than the width direction of the goods handling device. The width direction of the goods handling device can be the conveying direction of the pickup device 110.

The embodiments of the present disclosure further provide a goods handling device, which includes a handling mechanism 100 and a storage mechanism 200. The storage mechanism 200 includes a storage space 210. The handling mechanism can translate the goods between the shelf and the storage space.

In another embodiment, the pickup device 110 is used for picking up goods from the shelf 400 or placing goods on the shelf 400. The pickup device 110 includes a picking part 111, a first driving component 112, and a second driving component 113. The picking part 111 is the main component of the pickup device 110, used for picking up the goods. The pickup part 111 is set on the first driving component 112. The first driving component 112 drives the pickup part 111 to move. The first driving component 112 is connected to the second driving component 113. The second driving component 113 drives the first driving component 112 to move.

In the above embodiment, the first driving component 112 may include a first driving motor 1121, a first lead screw 1122, and a first guide rail 1123. The first driving motor 1121 may be fixed on the first guide rail 1123. Specifically, a mounting plate may be provided on the first guide rail 1123, and the first driving motor 1121 is mounted on the mounting plate. The first lead screw 1122 and the first guide rail 1123 can be rotatably connected, and the extension directions of the first lead screw 1122 and the first guide rail 1123 can be parallel. The pickup part 111 can slide along the extension direction of the first guide rail 1123 relative to the first guide rail 1123. The pickup part 111 is connected to the first lead screw 1122 for transmission, and the first driving motor 1121 can be connected to the first lead screw 1122. The first driving motor 1121 can drive the pickup part 111 to move through the first lead screw 1122.

The second driving component 113 may include a second driving motor 1131, a second lead screw 1132, and a second guide rail 1133. The second driving motor 1131 may be fixed on the second guide rail 1133, specifically, the second driving motor 1131 may be fixed on the mounting bracket 130 for carrying the second guide rail 1133. The second lead screw 1132 can be rotatably connected to the second guide rail 1133, and the extension directions of the second lead screw 1132 and the second guide rail 1133 are parallel. The first guide rail 1123 slides along the extension direction of the second guide rail 1133 relative to the second guide rail 1133. The extension direction of the first guide rail 1123 is parallel to the extension direction of the second guide rail 1133. The first guide rail 1123 is connected to the second lead screw 1132 for transmission, and the second driving motor 1131 is connected to the second lead screw 1132. The second driving motor 1131 can drive the first guide rail 1123 to move through the second lead screw 1132.

In another embodiment, the pickup part 111 includes a main part 1111 and a suction part 1112. The suction part 1112 can be provided on the main part 1111, and the main part 1111 can be connected to the first driving component 112. The main part 1111 can be provided with a ventilation channel, and the suction part 1112 can be provided with a first through hole, with the ventilation channel connected to the first through hole.

This solution can ventilate or evacuate the ventilation channel. When the ventilation channel is evacuated, the ventilation channel becomes negative pressure, and the goods can be adsorbed onto the suction part 1112. When the ventilation channel is ventilated, the pressure inside the ventilation channel is positive, thereby achieving desorption of the goods. The pickup unit 111 with this structure has lower requirements for the type, material, and shape of the goods, making the pickup unit 111 compatible with more types of goods and improving the compatibility of the handling mechanism 100.

In another embodiment, the first conveying part 123 can include a first roller group 1231 and a second roller group 1232, where the first roller group 1231 and the second roller group 1232 each can include rollers that are parallel to each other and arranged at intervals along the conveying direction of the first conveying device 120, and the pickup device 110 is located between the first roller group 1231 and the second roller group 1232.

In this solution, rollers are used for goods conveying, and there are various combinations of rollers, making the transmission method more flexible. In addition, the pickup device 110 is located between the first roller group 1231 and the second roller group 1232. At this time, the first conveying part 123 supports both sides of the goods. Compared to the single-side support for the goods, the double-side support can prevent the goods from falling off the first conveying part 123, thereby improving the safety and reliability of goods transportation.

In another embodiment, the first conveying device 120 further includes a third roller group and a lifting mechanism. The third roller group may include multiple rollers parallel to each other and arranged at intervals along the direction of movement of the pickup device 110. The first conveying part 123 is located between adjacent rollers of the third roller group. The lifting mechanism is connected to the first conveying part 123, and can be used to lift or lower the first conveying part 123, to make the surface of the first conveying part 123 higher or lower than the surface of the rollers in the third roller group.

In the specific operation process, when the pickup device 110 picks up goods from the shelf 400 or puts down goods on the shelf 400, the surface of the first conveying part 123 needs to be lower than the surface of the rollers in the third roller group, so as not to hinder the conveying of goods. When the first conveying device 120 transfers goods, the lifting mechanism lifts the first conveying part 123, such that the goods carried on the third roller group can come into contact with the first conveying part 123 and be transferred.

The above-mentioned lifting mechanism can be a structure such as a pneumatic cylinder, hydraulic cylinder, linear motor, etc. Of course, it can also be other structures, which are not limited in the present disclosure.

In an embodiment, the first storage shelf 201 and the second storage shelf 202 each may include a shelf body 230, with the aforementioned storage space 210 on the shelf body 230. The second conveying part 222 may include a conveyor belt 2221, a first transmission shaft 2222, and a second transmission shaft 2223. The first transmission shaft 2222 and the second transmission shaft 2223 are both rotatably connected to the shelf body 230. The first transmission shaft 2222 is parallel to the second transmission shaft 2223, and the conveyor belt 2221 can be sleeved on the first transmission shaft 2222 and the second transmission shaft 2223. Specifically, synchronous wheels are fixedly set on the first transmission shaft 2222 and the second transmission shaft 2223, and the synchronous wheels rotate together with the first transmission shaft 2222 and the second transmission shaft 2223. The conveyor belt 2221 is sleeved on the synchronous wheels. The third transmission part 221 is rotatably connected to the shelf body 230, and the third transmission part 221 is rotatably connected to the first transmission shaft 2222. In this solution, the storage mechanism 200 has a simple structure, is easy to manufacture, and has a lower cost.

In some embodiments, the third transmission part 221 may include a sheave, a shaft, and a conveyor belt. The sheave is rotatably connected to the shelf body 230 through the shaft, and the conveyor belt is sleeved on the shaft and the first transmission shaft 2222. When the second transmission part 122 drives the sheave to rotate, the sheave drives the shaft to rotate, and the shaft drives the first transmission shaft 2222 to rotate through the conveyor belt.

In the above embodiment, the lifting mechanism can be set on the shelf body 230, thereby further simplifying the structure of the goods handling device.

In another embodiment, the handling mechanism 100 may include a mounting bracket 130 that provides a mounting foundation for other components of the handling mechanism 100. The pickup device 110 and the first conveying device 120 can both be installed on the mounting bracket 130. In this solution, the pickup device 110 and the first conveying device 120 are fixedly installed using the same mounting bracket 130, thereby simplifying the structure of the handling mechanism 100.

For example, the driving source, first transmission part 121, second transmission part 122, and first conveying part 123 included in the first conveying device 120 mentioned above can all be installed on the mounting bracket 130. The second guide rail 1133 and the second driving motor 1131 mentioned above are also installed on the mounting bracket 130.

In the disclosed goods handling method, since the goods do not rotate and the conveying path of the goods is relatively short, the space occupied by the rotation and conveying path of the goods is saved. The handling mechanism and the storage mechanism can be set closer, making the volume of the goods handling device smaller.

Regarding the second aspect, in related arts, when the handling mechanism transfers goods to the storage mechanism, the goods are usually placed in sequence from the bottom storage space of the storage mechanism upwards, or from the top storage space of the storage mechanism downwards.

However, due to the sequential placement of goods from bottom to top or from top to bottom, goods with different attributes are arranged in a disorderly manner. Therefore, during the process of putting down goods, when a certain attribute of goods needs to be put down, it is difficult for the goods handling device to quickly locate the position of the goods to be put down. Operators need to confirm the position of the goods to be put down one by one, resulting in low efficiency of goods handling.

In view of this, the present disclosure provides a goods handling method based on a goods handling device. The following, in conjunction with the accompanying drawings, provides a detailed explanation of the technical solutions disclosed in each embodiment of the present disclosure.

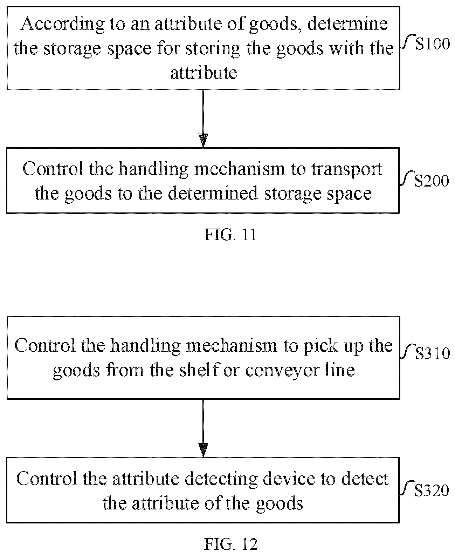

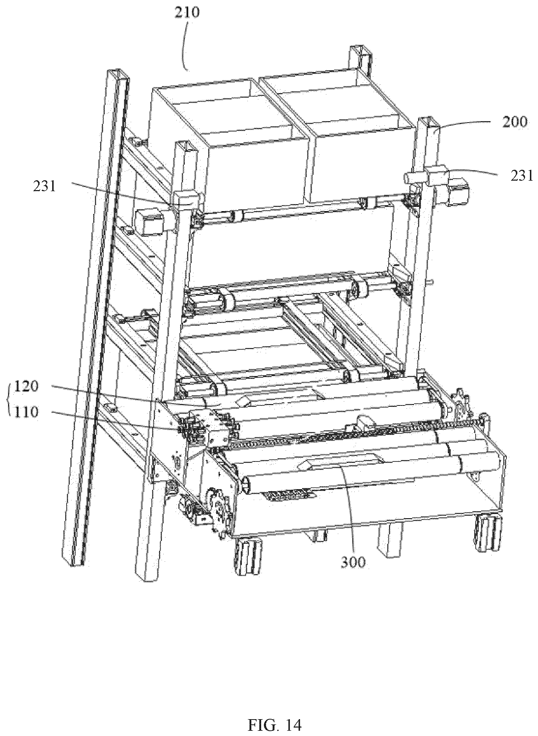

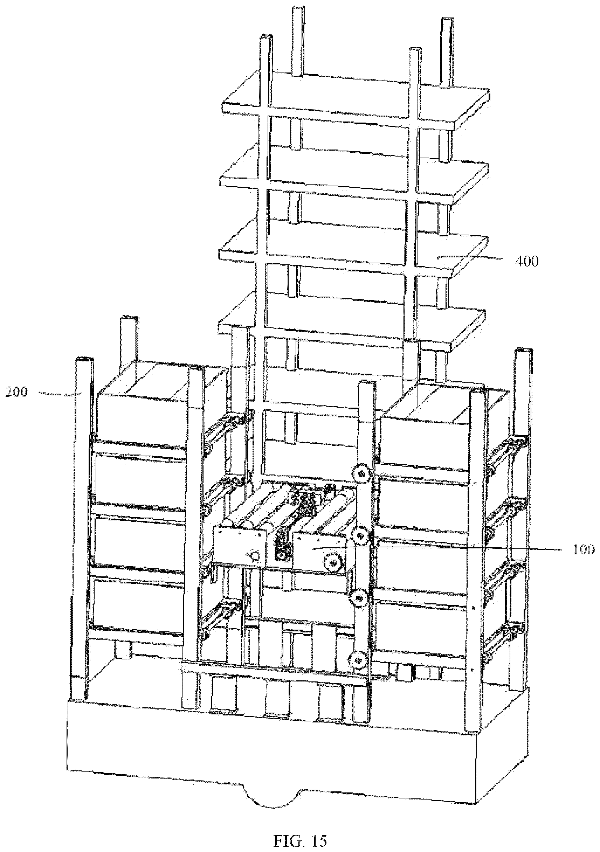

As shown in FIGs. 11 to 16, embodiments of the present disclosure provide a goods handling method based on a goods handling device. The goods handling method is applied to a goods handling device. The goods handling device can replace manual transferring of goods, thereby reducing manual labor intensity and improving goods storing efficiency. The goods handling device includes a handling mechanism 100 and a storage mechanism 200. The handling mechanism 100 includes a pickup device 110 and a first conveying device 120. The pickup device 110 is used to transfer the goods such that the goods can be transferred between the first conveying device 120 and the shelf 400. The conveying direction of the first conveying device 120 intersects with the moving direction of the pickup device 110. The storage mechanism 200 has multiple storage spaces 210, which are used to store the goods such that the goods can be transferred between the first conveying device 120 and the storage mechanism 200. Therefore, the handling mechanism 100 can transport the goods to the storage mechanism 200. Specifically, the handling mechanism 100 can transport goods from the shelf 400 or conveyor line to the storage space 210 of the storage mechanism 200 for storage, or can transport goods from the storage space 210 to the shelf 400 or conveyor line. The goods handling device includes two operations: picking up and putting down. Here, the pickup process refers to the process of transferring the goods from the shelf 400 or conveyor line to the storage mechanism 200 of the goods handling device. The putdown process refers to the process of transferring the goods from the storage mechanism 200 of the goods handling device to the shelf 400 or a conveyor line. The goods handling method in the embodiment is the process of transferring the goods from the shelf 400 or conveyor line to the storage mechanism 200 of the goods handling device.

The goods handling method according to embodiments of the present disclosure specifically includes S100 to S 200.

In S100, according to an attribute of the goods, the storage space 210 for storing the goods with the attribute is determined.

The attribute of the goods in the above steps can include weight, material, volume, or other distinguishable features. When the goods are conveyed, the attributes of the goods can be directly input into the goods position determining mechanism of the goods handling device. The goods position determining mechanism here can be the control system of the goods handling device or a separately set control mechanism, which is not limited in the present disclosure. The control system finds the corresponding storage space 210 based on the input attributes of the goods. The control system here can be a slave computer or a host computer, to which attributes can be manually inputted or automatically inputted by the system. Alternatively, the goods handling device may be provided with a device for detecting the attributes of the goods, through which the attributes of the goods can be detected. Alternatively, the goods can be labelled with an attribute tag (such as QR codes, barcodes, etc.), and the attributes of the goods can be obtained by scanning the attribute tag. Of course, other methods can also be used to obtain the attributes of the goods, which are not limited in the present disclosure.

In S200, the handling mechanism 100 is controlled to transport the goods to the designated storage space 210.

After the storage space 210 that matches the attributes of the goods are determined, the goods are transferred to that storage space 210 through the handling mechanism 100. The handling mechanism 100 can use a rotating transmission method during the process of transferring the goods. For example, the handling mechanism 100 can be a robotic arm. After the handling mechanism 100 picks up the goods from the shelf 400 or conveyor line, the handling mechanism 100 clamps one end of the goods. Therefore, the handling mechanism 100 needs to an end of the goods away from the clamp of the handling mechanism 100 towards the storage space 210 of the storage mechanism 200, which requires rotating the goods, turning the end of the goods away from the handling mechanism 100 towards the storage space 210 of the storage mechanism 200, and then transporting the goods to the storage space 210 for storage. Alternatively, the handling mechanism 100 may not rotate during the process of transferring goods. For example, the handling mechanism 100 may include a pickup device 110 and a first conveying device 120. During the pickup process, the pickup device 110 translates the goods from the shelf 400 or conveyor line to the first conveying device 120. Then, by controlling the first conveying device 120, the goods are conveyed to the storage space 210 and placed on the storage space 210.

In the embodiments of the present disclosure, the storage space 210 for storing the goods with the corresponding attribute is determined based on the attribute of the goods, and then the handling mechanism 100 is controlled to transfer the goods to the determined storage space 210. In this solution, the goods are stored in the corresponding storage space 210 based on the attribute of the goods. Therefore, during the process of putting down goods, it is possible to quickly locate positions of storage spaces 210 for placing the goods of the same attribute, thus achieving rapid putdown without the need for operators to confirm the storage space of each piece of goods one by one, thereby improving the efficiency of goods handling.

In addition, storing goods with the same attribute in designated storage spaces is more convenient for transportation and management of goods. It can also avoid unnecessary damage between goods with different attributes. For example, storing goods of different materials together can easily cause damage. Alternatively, the storage spaces 210 can be set differently based on different attributes. For example, some materials require anti-corrosion design for their storage spaces 210. If goods with this attribute is transferred to other storage space 210 without anti-corrosion design, it will cause damage to the goods. Therefore, storing goods based on their properties can improve their storage security and reliability.

In order to avoid transferring goods repeatedly to an already occupied storage space 210, in another embodiment, S100 may include:

According to the attribute of the goods, and recorded attributes and idle statuses of the plurality of storage spaces 210, retrieving the storage space 210 that corresponds to the attribute of the goods and is in an idle state.

During the transferring of goods, the control system of the goods handling device will record the goods entering and exiting each storage space 210, in order to determine the status of each storage space 210, to determine whether the storage space 210 is occupied or idle. For example, each storage space 210 can be provided with a sensor, and when the sensor on storage space 210 is triggered, the control system records that storage space 210 is in an occupied state. When the sensor on storage space 210 is released from triggering, the control system records that storage space 210 is in an idle state. Of course, the idle state here does not only refer to the state when storage space 210 is not placed with goods, but can also be the state when storage space 210 is not fully filled. For example, a storage space 210 can hold a total of two goods. When storage space 210 has already placed one piece of goods, it indicates that another goods can be placed on the storage space 210, so the position 210 should also be in an idle state.

This solution can avoid the case of duplicate storage of goods at the same storage space 210, thereby avoiding the duplication of work of the goods handling device and further improving the reliability of goods handling device.

In the above embodiments, the attributes of the goods can be manually recorded and transmitted to the control system of the goods handling device. At this time, manual labor intensity is high, and the transferring order of goods cannot be disrupted during the transferring process, otherwise there will be the case of erroneous transferring. For example, the manually inputted transferring order is to transfer goods with metal material first, followed by plastic material. If the goods handling device mistakenly inserts goods with a plastic material during the transferring of metal goods, it will cause the goods with a plastic material to be transferred to the storage space 210 for storing metal goods.

Based on this, in another embodiment, the handling mechanism 100 is provided with an attribute detecting device 300, which can be used to detect the attributes of the goods. For example, the attribute detecting device 300 can be used to detect the material, weight, and/or volume attributes of goods. At this point, the attribute detecting device 300 can be a corresponding material analyzer, electronic scale, and/or volume measurement instrument.

Before S100, the method can further include S310-S320.

In S310 the handling mechanism 100 is controlled to pick up the goods from the shelf 400 or conveyor line.

In this step, the goods are transferred onto the handling mechanism 100.

In S320, the attribute detecting device 300 is controlled to detect the attribute of the goods.

During the process of transferring the goods by the handling mechanism 100, the attribute detecting device 300 detects the attribute of the goods.

In this solution, the handling mechanism 100 retrieves the goods from the shelf 400 or conveyor line, and then detects the attribute of the goods, eliminating the need for manual recording and inputting of the attribute, thereby reducing manual labor intensity and further improving the automation of goods handling. In addition, conducting attribute detection on the goods during the transferring process by the handling mechanism 100 can prevent goods from being mistakenly transferred to the storage space 210 that does not correspond to the attribute of the goods, thereby improving the reliability and safety performance of goods handling.

In some embodiments, the attribute detecting device 300 is used to detect the weight of the goods, and in this case, the attribute detecting device 300 can be an electronic scale or other mechanism for measuring the weight of the goods.

S100 can include:
determining the storage space 210 for storing the goods of corresponding weight based on the weight of the goods.

S200 can include:
controlling the handling mechanism 100 to transfer the goods to the storage space 210 corresponding to the weight.

In this solution, the storage space 210 of the goods is determined based on the weight of the goods. At this time, different storage spaces 210 can carry different weights of goods, such that the corresponding goods that meet the weight of the storage space 210 can be set, which can improve the utilization rate of the storage space 210.

In another embodiment, the plurality of storage spaces 210 are arranged at intervals along a vertical direction, and for one of the plurality of storage spaces 210, weight of goods stored in the storage space 210 is greater than weight of goods stored in a storage space 210 located above the storage space 210. The weight of the goods stored in the upper storage space 210 is less than the weight of the goods stored in the lower storage space 210, which means that the upper storage space 210 stores lighter goods and the lower storage space 210 stores heavier goods.

In this solution, heavy goods are stored at the lower storage space 210, making the bottom of the storage mechanism 200 more stable and less prone to tipping over. In addition, when heavy goods are placed at a high place, they are more likely to be damaged if dropped from the storage space 210 at a high place. In the present disclosure, heavier goods are placed on the lower storage space 210, making it less likely to be damaged in the event of accidental dropping of the goods.

In another embodiment, the attribute detecting device 300 can be used to detect the volume of goods, where the attribute detecting device 300 can be a mechanism for measuring volume such as a volume measuring instrument.

S100 can include:
determining the storage space 210 for storing the corresponding volume of goods based on the volume of the goods.

S200 can include:
controlling the handling mechanism 100 to transfer the goods to the storage space 210 corresponding to the volume.

In this solution, the storage space 210 of the goods is determined based on the volume of the goods. At this time, different storage spaces 210 can carry different volumes of goods, such that the corresponding goods that meet the volume of the storage space 210 can be set, which can improve the utilization rate of the storage space 210.

In another embodiment, some of the storage spaces 210 in the multiple storage spaces 210 may have different sizes. In this solution, by setting storage spaces 210 of different sizes, the storage mechanism 200 can store more goods of different volumes, thereby improving the compatibility of goods handling device.

In some embodiments, the sizes of some storage spaces 210 may be different, that is, at least one of the length, width, and height of the storage spaces 210 can be different.

In order to further improve the transferring capacity of the goods handling device, in another embodiment, multiple storage spaces 210 may each have multiple storage regions arranged in parallel, where each of the storage regions can store one piece of goods. That is, each storage space 210 can store multiple goods. For example, each storage space 210 can store a 600 cm³ goods, and when the volume of the input goods is 300 cm³, one storage space 210 can store two pieces of goods. For example, each storage space can store a 600 cm³ goods, and when the input goods are 200 cm³ and 400 cm³, a 200 cm³ goods and a 400 cm³ goods can be stored at the storage space, thereby improving the utilization rate of the storage space.

S200 can include:
controlling the handling mechanism 100 to transport the goods to the designated storage region 210 that is in an idle state.

In this solution, each storage space 210 can store multiple pieces of goods, thus further improving the transferring capacity of the goods handling device.

In another embodiment, multiple storage spaces 210 can be arranged at intervals along the vertical direction. The goods handling device may also include a lifting mechanism. The handling mechanism 100 may include a pickup device 110 and a first conveying device 120. The storage mechanism 200 may include a second conveying device 220, which may be set at the storage space 210. The conveying direction of the second conveying device 220 is parallel to the conveying direction of the first conveying device 120, and the conveying direction of the first conveying device 120 intersects with the moving direction of the pickup device 110.

Before S100, the method can further include S410-S420.

In S410, the pickup device 110 is controlled to move in a first direction to a first position; when the pickup device 110 is at the first position, picking up, by the pickup device 110, the goods from the shelf 400 or conveyor line.

This step is the process of the pickup device 110 picking up the goods from the shelf 400 or conveyor line. The pickup device 110 is moved forward to a designated pickup position, which is the first position here. The first position can be flexibly adjusted according to the distance of the goods handling device from the shelf 400 or conveyor line and the storage space of the goods on the shelf 400 or conveyor line.

In S420, the pickup device 110 is controlled to move in a second direction to a second position, to translate the goods to a first target position of the first conveying device 120.

At this time, after the pickup device 110 picks up the goods, the pickup device moves away from the shelf 400 or conveyor line, that is, in the opposite direction to when picking up the goods. The second position here is where the pickup device 110 transfers the goods to the first conveying device 120. The pickup device 110 retrieves the goods from the shelf 400 or conveyor line and transfers the retrieved goods to the first conveying device 120, preparing for the first conveying device to transfer the goods to the storage space 210.

S200 can include S210 to S220.

In S210, the lifting mechanism is controlled to lift or lower the transporting mechanism 100 to dock the first conveying device 120 with the second conveying device 220 corresponding to the determined storage space 210.

In this step, the lifting mechanism lifts or lower the handling mechanism to find the storage space for the goods to be stored. In some embodiments, the lifting mechanism can be a chain fall (also known as a hand chain hoist, manual hoist, hoist, or chain hoist), or a combination of a pulley and a chain. The lifting mechanism can also be of other structures, which are not limited in the present disclosure.

In S220, the first conveying device 120 is controlled to translate the goods in a third direction; the goods are received, by the second conveying device 220, from the first conveying device 120; and the goods are translated, by the second conveying device 220, in the third direction to a second target position to place the goods in the storage space 210.

Where the first direction and the second direction can be parallel and opposite, and the third direction can intersect with the first direction.

The first conveying device 120 and the second conveying device 220 are started, to convey the goods from the first target position of the first conveying device 120 to the edge of the second conveying device 220. A part of the goods can overlap with the second conveying device 220, and the second conveying device 220 receives the goods. At this time, the goods are transferred from the first conveying device 120 to the second conveying device 220, and the second conveying device 220 continues to move and transport the goods to the second target position to store the goods in the storage space 210. In some embodiments, the first target position can be the middle position of the first conveying device 120, and the second target position can be the middle position of the second conveying device 220. Of course, it can also be other positions of the first conveying device and the second conveying device 220, which are not limited in the present disclosure.

In the above solution, the storage spaces 210 are arranged vertically. By increasing the height dimension of the storage mechanism 200, the number of storage spaces 210 can be expanded, thereby reducing the width and length dimensions of the storage mechanism 200, and making the length and width dimensions of the goods handling device smaller. Therefore, the size of the passage between the shelves 400 or conveyor lines can be reserved smaller, resulting in a smaller passage space required for transporting goods, which can reduce the space of the passage in the warehousing system, improve the space utilization of the warehousing system, and reduce storage costs.

In addition, the storage mechanism 200 has conveying capability, so there is no need for manual intervention in the transferring, which improves the transferring efficiency of the goods handling device. In addition, the pickup device 110 is responsible for grasping the goods, and the first conveying device 120 and the second conveying device 220 are responsible for translating the goods. Therefore, during the pickup and putdown processes, the goods do not need to rotate, and the conveying path of the goods is relatively short, thus saving the space occupied by the rotation and conveying path of the goods, and making it unnecessary for the goods to avoid the composition structure of the goods handling device, resulting in a smaller volume of the goods handling device. At the same time, due to the small volume of the goods handling device, the required passage space for transporting the goods is relatively small, which can reduce the passage space of the warehousing system, thereby improving the space utilization rate of the warehousing system and reducing storage costs.

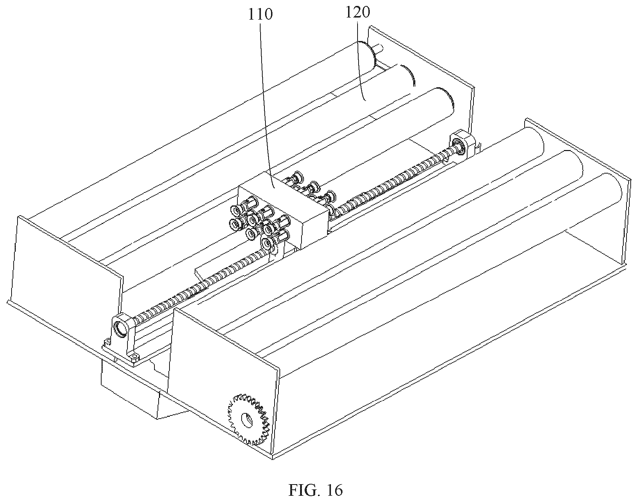

In the above embodiment, the first conveying device 120 and the second conveying device 220 can be roller components, which include multiple rollers that rotate to drive the movement of the goods. Of course, the first conveying device 120 and the second conveying device 220 can also be conveyor belt devices, which drive the movement of the goods through the conveyor belt. The first conveying device 120 and the second conveying device 220 mentioned above can also have other conveying structures, which are not limited in the present disclosure. The pickup device 110 in the above embodiment can pick up the goods by means of clamping, magnetic suction, adsorption, etc. Of course, the goods can also be picked up by other means, which are not limited in the present disclosure. As shown in FIG. 16, the first conveying device 120 may include two sets of roller groups, and the pickup device may be set between the two sets of roller groups. The pickup device may include a driving component for the pickup part, where the driving component can be composed of driving electrodes, a lead screw, a guide rail, and other components. The Pickup part can be a structure such as suction part or a clamp.

The above solution is the process of picking up the goods from the shelf 400 or conveyor line by the goods handling device. Of course, the goods on the goods handling device can also be put down the shelf 400 or conveyor line.

In another embodiment, the goods handling method disclosed herein may further include S510 to S520.

In S510, the second conveying device 220 is controlled to translate the goods in a fourth direction; the goods are received, by the first conveying device 120, from the second conveying device 220; and the goods are translated, by the first conveying device 120, in the fourth direction to the first target position.

During the putdown process, the first conveying device 120 and the second conveying device 220 are activated to convey the goods from the second target position of the second conveying device 220 to the edge of the first conveying device 120. The goods can be partially lapped on the first conveying device 120. At this time, the goods are transferred from the second conveying device 220 to the first conveying device 120, and the first conveying device 120 continues to move and transfer the goods to the first target position. At this time, due to the conveying function of the storage mechanism 200, during the putdown process, the second conveying device 220 is reversed to transport the goods to the first conveying device 120, and the first conveying device 120 also reverses to receive the goods and transport the goods to the first target position, which is the position where the pickup device 110 can grasp the goods. The reverse rotation of the first conveying device 120 and the second conveying device 220 mentioned above is relative to the rotation direction of the first conveying device 120 and the second conveying device 220 during the pickup process of the storage space 210 on the same side.

In S520, the pickup device 110 is controlled to pick up the goods at the second position and move in the first direction to the first position, to translate the goods to the shelf 400 or conveyor line.

When the pickup device 110 is in the second position, the pickup device 110 is close to the goods and can perform operations such as clamping and adsorption on the goods. Where the third direction and the fourth direction are parallel and opposite.

This solution can execute corresponding steps according to different goods handling modes, which can avoid the problem of goods backlog caused by chaotic execution steps during the goods handling process. The goods are transferred between the first conveying device 120 and the second conveying device 220 for mutual translation. The second conveying device 220 here is used not only for the storage mechanism 200 to receive the goods conveyed by the handling mechanism 100, or for conveying the goods to the handling mechanism 100, but also for supporting the goods. That is, when the goods are stored in the storage space 210 of the storage mechanism 200, the goods are actually placed on the second conveying device 220.

In the embodiments, the conveying direction of the first conveying device 120 intersects with the moving direction of the pickup device 110. Therefore, the storage mechanism 200 can be located on the left or right side of the shelf 400. When the pickup device 110 picks up the goods forward or backward, the first conveying device 120 transmits the goods to the right or left side. Therefore, the pickup device 110 does not need to be avoided, and there is no need to lift or lower the pickup device 110, making the structure of the handling mechanism 100 relatively simple.

In the above embodiment, each storage space 210 has multiple storage regions arranged in parallel, and each storage region stores one piece of goods. At this time, when the storage region on one storage space 210 stores goods, and another storage region on that storage space 210 is to be placed with goods, during the second conveying device 220 transferring the goods along its conveying direction, the goods already stored on the storage space 210 is easily moved in the third direction, causing the goods to fall off the side of the storage space 210 away from the first conveying device 120. Alternatively, during the putdown process, two pieces of goods are put down simultaneously, which can easily cause damage to the goods and reduce the safety and reliability of goods handling.

Based on this, in another embodiment, each storage space 210 can be provided with multiple stopping parts 231, and each storage region can be provided with at least one stopping part 231, which is used to block the goods in the third or fourth direction.

Before S220 or S510, the method may further include S600.

In S600, in a case where goods has been stored in a storage region of the storage space 210, a stopping part 231 of the storage region that has stored the goods is activated, to enable the stopping part 231 to stop the goods stored in the storage region from moving out of the storage region in the third direction or the fourth direction during a process of the first conveying device 120 translating the goods in the third direction, or during a process of the second conveying device 220 translating the goods in the fourth direction.

In this solution, during the process of picking up or releasing the goods, the goods already stored on the storage space 210 are blocked to prevent the goods from falling off the second conveying device 220 or causing the goods to be mistakenly transmitted out of the storage space 210, thereby improving the safety and reliability of goods transportation.

In some embodiments, the stopping part 231 can be a mechanism such as a cylinder or hydraulic cylinder, and when it is necessary to block the goods, the driving shaft of the cylinder or hydraulic cylinder extends.

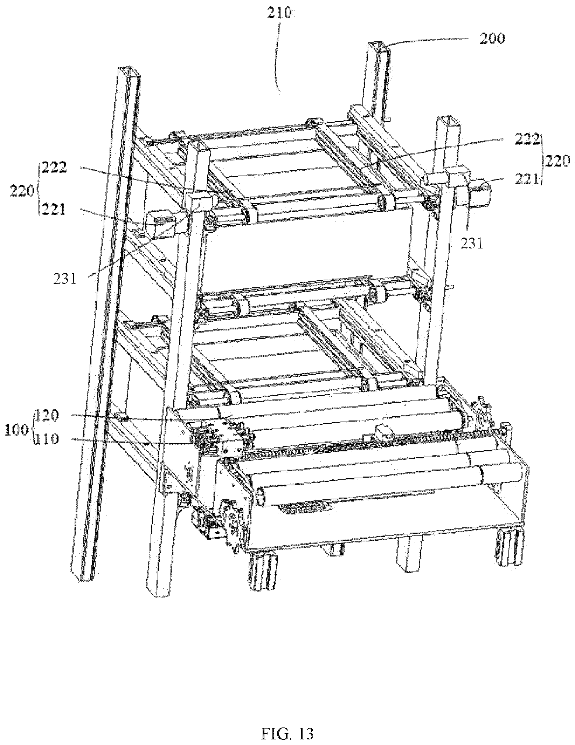

In another embodiment, as shown in FIG. 13, the second conveying device 220 may include multiple third transmission parts 221 and multiple second conveying parts 222, where the third transmission parts 221 and the second conveying parts 222 may be connected respectively. The third transmission part 221 can be used to drive the goods carried on the second conveying part 222.

Controlling the pickup device 110 to move in the second direction to the second position, to translate the goods to the first target position of can the first conveying device 120 includes:
controlling the pickup device 110 to move in the second direction to the second position corresponding to one of the storage regions, to translate the goods to the first target position corresponding to the one of the storage regions; and
transferring, by the first conveying device 120, the goods to a corresponding storage region, and transferring, by the second conveying part 222 corresponding to the storage region, the goods.

In this solution, each storage region is provided with a second conveying part 222 and a third transmission part 221. At this time, each piece of goods is transmitted through the corresponding second conveying part 222 and third transmission part 221. Therefore, when transporting goods in one storage region, the second conveying part 222 and third transmission part 221 in the other storage region do not start, thus avoiding dropping of the goods in that storage region.

The second conveying part 222 mentioned above may include a conveyor belt, a driven shaft, and a driving shaft. The conveyor belt is sleeved on the driven shaft and the driving shaft, and the driving shaft is connected to the third transmission part. Of course, the second conveying part 222 can also have other structures, which are not limited in the present disclosure.

The embodiments of the present disclosure further provide a goods handling device, which includes a handling mechanism 100, a storage mechanism 200, and a goods position determining mechanism. The handling mechanism 100 includes a pickup device 110 and a first conveying device 120. The pickup device 110 is used to transfer the goods such that the goods can be transferred between the first conveying device 120 and the shelf 400. The conveying direction of the first conveying device 120 intersects with the moving direction of the pickup device 110. The storage mechanism 200 has multiple storage spaces 210, which are used to store the goods such that the goods can be transferred between the first conveying device 120 and the storage mechanism 200. The goods position determining mechanism determines the storage space 210 for storing the corresponding attribute of the goods based on the attribute of the goods. The handling mechanism 100 can be used to transport the goods between the storage mechanism 200 and the shelf 400 or conveyor line.

In the embodiments of the present disclosure, the storage space 210 for storing the goods with the corresponding attribute is determined based on the attribute of the goods, and then the handling mechanism 100 is controlled to transfer the goods to the determined storage space 210. In this solution, the goods are stored in the corresponding storage space 210 based on the attribute of the goods. Therefore, during the process of putting down goods, it is possible to quickly locate positions of storage spaces 210 for placing the goods of the same attribute, thus achieving rapid putdown without the need for operators to confirm the storage space of each piece of goods one by one, thereby improving the efficiency of goods handling.

In addition, storing goods with the same attribute in designated storage sapces 210 is more convenient for transportation and management of goods. It can also avoid unnecessary damage between goods with different attributes. For example, storing good of different materials together can easily cause damage. Alternatively, different storage spaces 210 can be set according to different attributes. For example, some materials require anti-corrosion design for their storage spaces 210. If goods with this attribute is transferred to other storage space 210 without anti-corrosion design, it will cause damage to the goods. Therefore, storing goods based on their properties can improve their storage security and reliability.

In another embodiment, the material transferring device can further include an attribute detecting device 300, where the attribute detecting device 300 can be set on the handling mechanism 100, the attribute detecting device 300 is connected to the material position determining mechanism, and the attribute detecting device 300 transmits a detected attribute of the material to the material position determining mechanism.

In this solution, the goods handling device retrieves the goods from the shelf 400 or conveyor line, and then detects the attribute of the goods, eliminating the need for manual recording and inputting of the attribute, thereby reducing manual labor intensity and further improving the automation of goods handling. In addition, conducting attribute detection on the goods during the transferring process by the handling mechanism 100 can prevent goods from being mistakenly transferred to the storage space 210 that does not correspond to the attribute of the goods, thereby improving the reliability and safety performance of goods handling.

In some embodiments, the attribute detecting device 300 can be installed on the aforementioned pickup device 110 or on the aforementioned first conveying device 120. For example, when the first conveying device 120 is a roller group, the attribute detecting device 300 can be set between adjacent two rollers of the roller group.

Based on the goods handling method according to embodiments of the present disclosure, embodiments of the present disclosure further provide a warehousing system that can apply any of the goods handling methods described in the previous embodiments.

In the present disclosure, the warehousing system includes shelves 400 or conveyor lines, as well as the goods handling device. The shelves 400 or conveyor lines are used to store goods, and the goods handling device can be docked with a shelf 400 or a conveyor line to pick up and place the goods.

In the embodiments of the present disclosure, the storage space 210 for storing the goods with the corresponding attribute is determined based on the attribute of the goods, and then the handling mechanism 100 is controlled to transfer the goods to the determined storage space 210. In this solution, the goods are stored in the corresponding storage space 210 based on the attribute of the goods. Therefore, during the process of putting down goods, it is possible to quickly locate positions of storage spaces 210 for placing the goods of the same attribute, thus achieving rapid putdown without the need for operators to confirm the storage space of each piece of goods one by one, thereby improving the efficiency of goods handling.

Regarding the third aspect, the storage mechanism in related arts has a single location and can store a small amount of goods, resulting in lower efficiency of the goods handling device.

Moreover, in related arts, after the handling mechanism picks up the goods from the shelf, the handling mechanism needs to rotate the goods and move the goods away from the pickup mechanism towards the storage space of the storage mechanism. Then, the goods are transferred to the storage space for storage.

However, in order to prevent interference or collision between the goods and the storage mechanism during rotation, the distance between the handling mechanism and the storage mechanism needs to be set relatively large, resulting in a larger overall volume of the goods handling device.

In view of this, the present disclosure provides a goods handling device. The following, in conjunction with the accompanying drawings, provides a detailed explanation of the technical solutions disclosed in each embodiment of the present disclosure.

As shown in FIGs. 1 to 10, embodiments of the present disclosure provide a goods handling device. The goods handling device can replace manual transferring of goods, thereby reducing manual labor intensity and improving goods storing efficiency. The goods handling device in the present disclosure includes a handling mechanism 100 and a storage mechanism 200.

The handling mechanism 100 includes a pickup device 110 and a first conveying device 120. The pickup device 110 is used for transferring the goods such that the goods can be translated between the first conveying device 120 and the shelf 400. The conveying direction of the first conveying device 120 intersects with the moving direction of the pickup device 110, and at this time, the direction in which the first conveying device 120 transfers the goods and the direction in which the pickup device 110 transfers the goods are in two intersecting directions. The above-mentioned goods handling device cooperates with the shelf 400.

The storage mechanism 200 has a storage space 210, which is used to store the goods. The storage mechanism 200 is the mechanism used by the goods handling device itself to store the goods. The goods handling device retrieves the goods from shelf 400, stores the goods in the storage mechanism 200, and then moves the goods to the next shelf 400. The goods stored in the storage mechanism 200 is placed in that shelf 400 to achieve goods handling.

The storage mechanism 200 includes a first storage shelf 201 and a second storage shelf 202, the first storage shelf 201 and the second storage shelf 202 each have the storage space 210, and the first storage shelf 201 and the second storage shelf 202 are arranged on a same side or both sides of the first conveying device 120 along the conveying direction of the first conveying device 120.

In the specific operation process, the goods handling device includes two operations: picking up and putting down. Here, the pickup process refers to the process of transferring the goods from the shelf 400 to the storage mechanism 200 of the goods handling device. The putdown process refers to the process of transferring the goods from the storage mechanism 200 of the goods handling device to the shelf 400.

The goods handling device can be moved to the first target position corresponding to shelf 400 before picking up and putting down the goods. The first target position here refers to the location where the goods handling device picks up or puts down the goods.

During the pickup process, the pickup device 110 is controlled to pick up the goods and move the goods from the shelf 400 to the second target position of the first conveying device 120. In some embodiments, the second target position can be the middle position of the first conveying device 120, or can be any other position of the first conveying device 120, which is not limited in the present disclosure.

The first conveying device 120 is activated to transfer the goods from the second target position of the first conveying device 120 to the storage space 210 of the storage mechanism 200.

During the putdown process, the goods are taken out from storage space 210 and placed on the first conveying device 120. The first conveying device 120 is activated to transfer the goods to the second target position of the first conveying device 120. Here, the goods can be pushed into the edge of the first conveying device 120 by manual or other external forces (such as mechanical structures such as robotic arms). When the goods come into contact with the first conveying device 120, the first conveying device 120 will drive the goods to move, thereby transferring the goods onto the first conveying device 120. The first conveying device 120 continues to move, conveying the goods to the second target position. Then the pickup device 110 is controlled to pick up the goods from the second target position and transport the goods to the shelf for storage.

In the embodiments of the present disclosure, the first storage shelf 201 and the second storage shelf 202 are arranged on both sides or the same side of the first conveying device 120 along the conveying direction of the first conveying device 120. The storage mechanism 200 is a double rack structure, which can expand more storage spaces 210, thereby further improving the storage and transferring capacity of the goods handling device and enhancing the transferring efficiency.

In addition, the first storage shelf 201 and the second storage shelf 202 are arranged on both sides of the first conveying device 120 along the conveying direction of the first conveying device 120. The first conveying device 120 can transport towards both sides, which can reduce the transmission path of the goods and further improve the efficiency of the goods handling device.

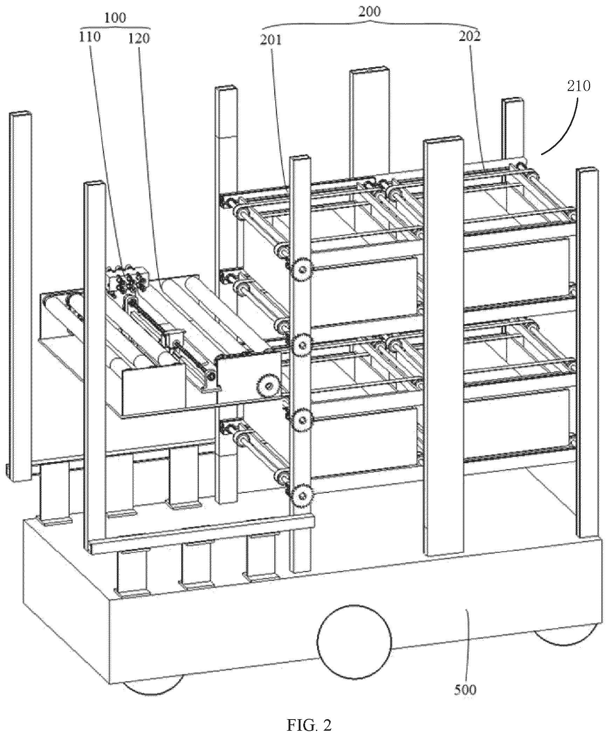

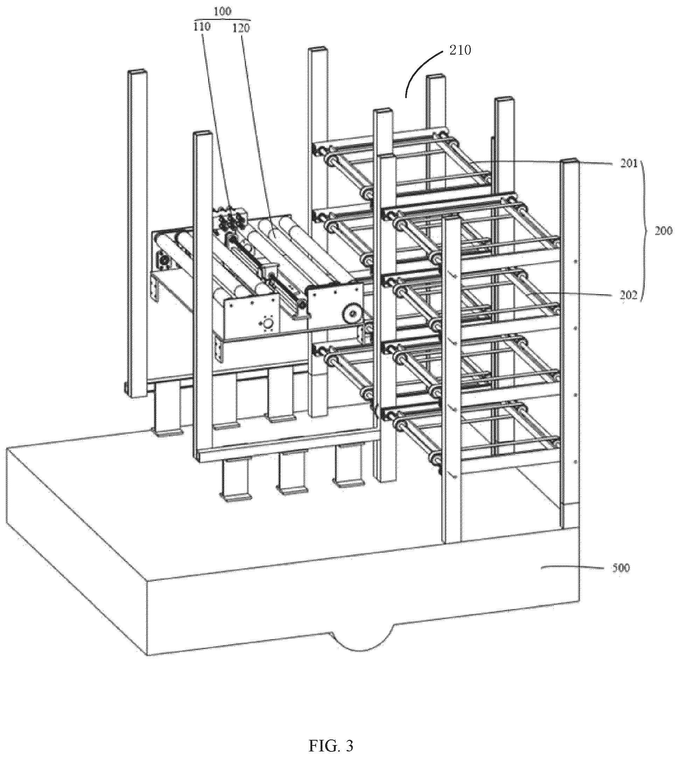

In the above embodiments, as shown in FIGs. 2 and 3, when the first storage shelf 201 and the second storage shelf 202 are arranged on the same side of the first conveying device 120, the first conveying device 120 can transport goods towards the same side. When the first storage shelf 201 and the second storage shelf 202 are arranged on the same side of the first conveying device 120, there are two arrangements, as shown in FIG. 2. The first arrangement is that the first storage shelf 201 is located between the handling mechanism 100 and the second storage shelf 202. That is, the goods are first transferred to the first storage shelf 201, and then the goods on the first storage shelf 201 can continue to be transferred backward to the second storage shelf 202 for storage. At this time, each time when transferring goods, when the storage spaces 210 of the second storage shelf 202 and the first storage shelf 201 in the same layer store the goods, the goods are first stored in the storage space 210 of the second storage shelf 202, and then stored in the storage space 210 on the first storage shelf 201. However, when picking up the goods from the storage mechanism 200 in this arrangement, if it is necessary to pick up the goods on the second storage shelf 202 and the first storage shelf 201 stores goods, the goods on the first storage shelf 201 need to be picked up first, and then the goods on the second storage shelf 202 can be picked up.

The second arrangement is that the first storage shelf 201 and the second storage shelf 202 are arranged side by side facing the first conveying device 120. At this time, both the first storage shelf 201 and the second storage shelf 202 can achieve the goods handling to the first conveying device 120. When transferring the goods, the pickup device 110 has two target positions, which correspond to the first storage shelf 201 and the second storage shelf 202 respectively. The dimension of the handling mechanism 100 in the direction of movement of the pickup device 110 is greater than a certain value, such that the handling mechanism has the two target positions corresponding to the first storage shelf 201 and the second storage shelf 202 respectively. In the second arrangement, the first storage shelf 201 and the second storage shelf 202 can be independently operated during the process of releasing and retrieving the goods.

In another solution of the second arrangement, as shown in FIG. 3, the first conveying device 110 can move along the arrangement direction of the first storage shelf 201 and the second storage shelf 202, such that the first conveying device 110 is docked with one of the storage shelfs 201 and 202.

In the above embodiment, the handling mechanism 100 can rotate the goods by a certain angle before translating the goods to the storage space 210 during the transferring process. Alternatively, the handling mechanism 100 can also use translational transfer to transport the goods to the storage space, that is, the goods do not rotate during the transferring process.

For example, after the pickup device 110 picks up the goods, the pickup device 110 rotates the goods 90 degrees and then transfers the goods through the first conveying device 120. Alternatively, the pickup device can transfer the goods directly through the first conveying device 120 without rotating after picking up the goods.

In another embodiment, the storage space 210 may be correspondingly provided with a second conveying device 220, and the conveying direction of the first conveying device 120 may be the same as that of the second conveying device 220. The first conveying device 120 cooperates with the second conveying device 220 to allow the goods to be transferred in a translational manner between the first conveying device 120 and the storage space 210.

During the pickup process, the pickup device 110 is controlled to pick up the goods and move the goods from the shelf 400 to the second target position of the first conveying device 120. The first conveying device 120 and the second conveying device 220 are started, to convey the goods from the second target position of the first conveying device 120 to the edge of the second conveying device 220. A part of the goods can overlap with the second conveying device 220, and the second conveying device 220 receives the goods. At this time, the goods are transferred from the first conveying device 120 to the second conveying device 220, and the second conveying device 220 continues to move and transport the goods to the third target position to store the goods in the storage space 210. In some embodiments, the third target position may be the middle position of the second conveying device 220, which can also be other positions of the second conveying device 220, which is not limited in the present disclosure.

At this time, the goods are transferred from the first conveying device 120 to the second conveying device 220, and then the second conveying device 220 transfers the goods to the third target position for storage. The second conveying device 220 here is used not only for the storage mechanism 200 to receive the goods conveyed by the handling mechanism 100, or for conveying the goods to the handling mechanism 100, but also for supporting the goods. That is, when the goods are stored in the storage space 210 of the storage mechanism 200, the goods are actually placed on the second conveying device 220, which means that the storage mechanism 200 itself has a conveying function.

During the putting down process, the first conveying device 120 and the second conveying device 220 are activated to convey the goods from the third target position of the second conveying device 220 to the edge of the first conveying device. The goods can be partially lapped on the first conveying device 120. At this time, the goods are transferred from the second conveying device 220 to the first conveying device 120, and the first conveying device 120 continues to move and transfer the goods to the second target position. At this time, due to the conveying function of the storage mechanism 200, during the putting down process, the second conveying device 220 is reversed to transport the goods to the first conveying device 120, and the first conveying device 120 also reverses to receive the goods and transport the goods to the second target position, which is the position where the pickup device 110 can grasp the goods. The reverse rotation of the first conveying device 120 and the second conveying device 220 mentioned above is relative to the rotation direction of the first conveying device 120 and the second conveying device 220 during the pickup process of the storage shelf on the same side.

In the embodiments of the present disclosure, the storage mechanism has conveying capability, so there is no need for manual intervention in the transferring, which improves the transferring efficiency of the transferring device. In addition, the pickup device 110 is responsible for grasping the goods, and the first conveying device 120 and the second conveying device 220 are responsible for translating the goods. Therefore, during the pickup and putdown processes, the goods do not need to rotate, and the conveying path of the goods is relatively short, thus saving the space occupied by the rotation and conveying path of the goods, and making it unnecessary for the goods to avoid the composition structure of the goods handling device, resulting in a smaller volume of the goods handling device. At the same time, due to the small volume of the goods handling device, the required passage space for transporting the goods is relatively small, which can reduce the passage space of the warehousing system, thereby improving the space utilization rate of the warehousing system and reducing storage costs.

In order to improve storage capacity, the shelf 400 has multiple storage spaces arranged vertically. In this solution, the pickup and releasing positions of the handling mechanism 100 are fixed, and the handling mechanism 100 is opposite to the inlet and outlet of the shelf 400. The inlet and outlet here can be a storage place of the shelf 400. During the pickup process, the goods can be manually or by other method transferred to the position of the inlet and outlet of shelf 400, and then the goods are picked up by the handling mechanism 100. After the handling mechanism 100 finishes picking up the goods, the next goods can be manually or by other method transferred to the inlet and outlet. During the process of putting down the goods, manual or other external forces sequentially transfer the goods at the inlet and outlet to the storage place of the shelf 400. In the above embodiments, external force and manual assistance are required for picking up and putting down goods, making the operation difficult.

Based on this, in another embodiment, the goods handling device may further include a lifting mechanism, which is connected to the handling mechanism 100 and can be used to lift or lower the handling mechanism 100.

In the above embodiment, during the pickup process, the handling mechanism 100 is first lifted or lowered to a position corresponding to the storage place where the goods are to be picked up by the lifting mechanism. Then, the goods on the storage place is taken out by the pickup device 110, and the handling mechanism 100 is lifted or lowered to the position corresponding to the storage space 210 by the lifting mechanism. Finally, the goods are transferred from second first target position to the third target position.

During the putting down process, the goods on storage space 210 are first transferred from the third target position to the second target position, and then the handling mechanism 100 is lifted or lowered to the corresponding position in one of the storage places through the lifting mechanism. Then the goods are moved from the second target position to the storage place through the pickup device 110.

In this solution, the lifting mechanism can lift or lower the position of the handling mechanism 100, to move the handling mechanism 100 to positions corresponding to storage spaces of different heights, thereby reducing the difficulty of goods handling.

In some embodiments, the lifting mechanism can be a chain fall (also known as a hand chain hoist, manual hoist, hoist, or chain hoist), or a combination of a pulley and a chain. The lifting mechanism can also be of other structures, which are not limited in the present disclosure.

In order to further improve storage capacity, in another embodiment, the first storage shelf 201 and the second storage shelf 202 may each include multiple storage spaces 210, and the multiple storage spaces 210 inside the first storage shelf 201 and the second storage shelf 202 may be arranged at intervals along the vertical direction. Each storage space 210 is provided with a second conveying device 220. When picking up and putting down the goods by the goods handling device, the first conveying device 120 is docked with the second conveying device 220 corresponding to one of the storage spaces 210. The first conveying device 120 and the second conveying device 220 corresponding to one of the storage spaces 210 are docked, which can be understood as the heights of the first conveying device 120 and the second conveying device 220 corresponding to one of the storage spaces 210 being the same, and the goods can be transferred between the first conveying device 120 and the second conveying device 220.

In this solution, the number of storage spaces 210 can be multiple, thereby increasing the capacity of the goods handling device and enabling the goods handling device to simultaneously transfer more goods, improving the transferring efficiency of the goods handling device. In addition, the storage spaces are expanded along the height direction of the goods handling device, which is beneficial for reducing the length and width dimensions of the goods handling device, thereby reducing the required passage space for the goods handling device and further reducing the passage space of the warehousing system.

In the above embodiment, during the pickup process, when the pickup device 110 picks up the goods to move the goods from the shelf 400 to the second target position of the first conveying device 120, the handling mechanism 100 is lifted or lowered to find the storage space 210 for storing the goods and store the goods in that storage space 210. During the putting down process, the lifting and handling mechanism 100 first finds the storage space 210 where the goods needs to be unloaded, and transfers the goods from the storage space 210 to the first conveying device 120. Then, the handling mechanism 100 is lifted or lowered to the position of the shelf 400 where the goods are to be stored.

In the above embodiment, the heights of the storage spaces 210 on the same layer of the first storage shelf 201 and the second storage shelf 202 can be the same. In this case, if there is a misoperation, goods that should have been transferred to the first storage shelf 201 may easily be transferred to the second storage shelf 202, or the goods that should have been transferred to the second storage shelf 202 may easily be transferred to the first storage shelf 201, causing confusion in the storage of goods.

Therefore, in another embodiment, the first storage shelf 201 and the second storage shelf 202 are arranged on both sides of the first conveying device 120 along the conveying direction of the first conveying device 120, or the first storage shelf 201 and the second storage shelf 202 are arranged on a same side of the first conveying device 120 along the conveying direction of the first conveying device 120 and the first storage shelf 201 and the second storage shelf 202 are arranged side by side facing the first conveying device 120; where storage spaces 210 on a same layer of the first storage shelf 201 and the second storage shelf 202 are arranged in a staggered manner. In some embodiments, one storage space 210 in the first storage shelf 201 has a different height from a corresponding storage space 210 (e.g., on the same layer with the storage space 210 in the first storage shelf 201) in the second storage shelf 202.

In this solution, when a misoperation occurs, due to the staggered arrangement of storage spaces 210 on the same layer of the first storage shelf 201 and the second storage shelf 202, the goods that should have been transferred to the first storage shelf 201 are blocked by the second storage shelf 202 when the goods are transferred to the second storage shelf 202, and will not enter the second storage shelf 202, thus improving the safety and reliability of goods handling.

In another embodiment, the goods handling device may further include a walking mechanism, and both the handling mechanism 100 and the storage mechanism 200 may be provided on the base. The base 500 can be installed on a walking mechanism, which can drive the base 500 to move. In this solution, the walking mechanism drives the handling mechanism and the storage mechanism to move through the base, making it easier for the goods handling device to carry out goods handling, reducing manual intervention in goods handling, and thus reducing the labor intensity of operators.

At this point, the walking mechanism can be an Automated Guided Vehicle (AGV) or a universal wheel mechanism. Of course, the walking mechanism can also be of other structures, which are not limited in the present disclosure.

In another embodiment, the goods handling device can further include a track and a base 500, where the handling mechanism 100 and the storage mechanism 200 are both set on the base 500, and the base 500 is in sliding cooperation with the track, and the base 500 can slide along an extension direction of the track. In this solution, the track can be laid on the ground of the passage, and the goods handling device can move along the extension direction of the track, making it difficult for the goods handling device to deviate from its travel route during the movement.

In the above embodiment, the first conveying device 120 and the second conveying device 220 are driven separately. At this time, the first conveying device 120 and the second conveying device 220 can have independent driving sources, resulting in a high energy consumption of the goods handling device.

Based on this, in another embodiment, the first conveying device 120 may include a first transmission part 121 and a first conveying part 123, with the first transmission part 121 connected to the first conveying part 123. The first conveying part 123 is used to carry and transmit the goods. The first transmission part 121 is used to drive the first conveying part. The second conveying device 220 may include a third transmission part 221 and a second conveying part 222, with the third transmission part 221 cooperating with the second conveying part 222. The second conveying part 222 is used to carry and transport the goods, and the third transmission part 221 is used to drive the second conveying part 222.

The first conveying device 120 may also include a driving source and a second transmission part 122. The driving source can be connected to the first conveying part 123 through the first transmission part 121, and the first transmission part 121 cooperates with the second transmission part 122. The second transmission part 122 can cooperate with the third transmission part 221 to drive the second conveying part 222 through the third transmission part 221.

The conveying paths of the driving source include two, one conveying path is driven by the driving source to rotate the first conveying part 123 through the first transmission part 121, and the other conveying path is driven by the driving source to rotate the second conveying part 222 through the first transmission part 121, the second transmission part 122, and the third transmission part 221. At this time, the driving source can simultaneously drive the first conveying part 123 and the second conveying part 222 to transfer the goods, thereby enabling the first conveying device 120 and the second conveying device 220 to share the driving source, simplifying the structure and operation of the goods handling device, and reducing the energy consumption of the goods handling device.

Alternatively, in another embodiment, the second conveying device 220 may further include a driving source and a second transmission part 122, and the driving source may be connected to the second conveying part 222 through a third transmission part 221. The third transmission part 221 is connected to the second transmission part 122, and the second transmission part 122 can cooperate with the first transmission part 121 to drive the second conveying part 222 through the first transmission part 121. This solution achieves the same effect as the above solution, and will not be repeated in the present disclosure.

In some embodiments, the first conveying part 123 can be a component such as a conveyor belt or chain, and the first transmission part 121 can include a driving wheel and a driven wheel. The conveyor belt or chain can be wrapped around the driving wheel and the driven wheel, and the driving source drives the driving wheel to rotate. The driving wheel drives the driven wheel to rotate through the conveyor belt or chain.

The second transmission part 122 and the third transmission part 221 can both be gear sets, and the second conveying part 222 can be a conveyor belt mechanism, a chain transmission mechanism, or a roller transmission mechanism, which is not limited in the present disclosure. The second transmission part 122 is coaxially arranged with the driving wheel. The driving wheel drives the second transmission part 122 to rotate, and the second transmission part 122 drives the third transmission part 221 to rotate, thereby driving the second conveying part 222 to rotate. The second transmission part 122 and the third transmission part 221 can also be a combination of a gear set and groove wheels, with the groove wheel on the second transmission part 122 cooperating with the groove wheel on the third transmission part 221. The first conveying device 120 and the second conveying device 220 mentioned above can also have other structures, which are not limited in the present disclosure.

When the first storage shelf 201 and the second storage shelf 202 are on the same side and arranged in the first arrangement, the first conveying device 120 can drive the second conveying device 220 of the first storage shelf 201 to move, and the second conveying device 220 of the second storage shelf 202 can be driven by the second conveying device 220 of the first storage shelf 201.

In another embodiment, the first conveying device 120 further includes a third roller group and a lifting mechanism. The third roller group may include multiple rollers parallel to each other and arranged at intervals along the direction of movement of the pickup device 110. The first conveying part 123 is located between adjacent rollers of the third roller group. The lifting mechanism is connected to the first conveying part 123, and can be used to lift or lower the first conveying part 123, to make the surface of the first conveying part 123 higher or lower than the surface of the rollers in the third roller group.

In the specific operation process, when the pickup device 110 picks up goods from the shelf 400 or puts down goods on the shelf 400, the surface of the first conveying part 123 needs to be lower than the surface of the rollers in the third roller group, so as not to hinder the conveying of goods. When the first conveying device transfers goods, the lifting mechanism lifts the first conveying part 123, such that the goods carried on the third roller group can come into contact with the first conveying part 123 and be transferred.

In this solution, the third roller group includes multiple rollers arranged at intervals along the direction of movement of the pickup device 110, which can increase the support area of the first conveying device for the goods, thereby avoiding the goods from falling off the first conveying device during transportation and improving the safety and reliability of goods transportation.

The above-mentioned lifting mechanism can be a structure such as a pneumatic cylinder, hydraulic cylinder, linear motor, etc. Or it can also be other structures, which are not limited in the present disclosure.

In another embodiment, the first conveying part 123 can include a first roller group 1231 and a second roller group 1232, where the first roller group 1231 and the second roller group 1232 each can include rollers that are parallel to each other and arranged at intervals along the conveying direction of the first conveying device 120, and the pickup device 110 can be located between the first roller group 1231 and the second roller group 1232.

In this solution, rollers are used for goods conveying, and there are various combinations of rollers, making the transmission method more flexible. In addition, the pickup device 110 is located between the first roller group 1231 and the second roller group 1232. At this time, the first conveying part 123 supports both sides of the goods. Compared to the single-side support for the goods, the double-side support can prevent the goods from falling off the first conveying part 123, thereby improving the safety and reliability of goods transportation.

In some embodiments, the first transmission part 121 may include a driving wheel, a driven wheel, and a conveyor belt. The driving source is connected to the driving wheel, and the driven wheel is connected to one of the rollers. The driving source drives the driving wheel to rotate, and the driving wheel drives the driven wheel to rotate through a conveyor belt. The driven wheel drives one of the rollers to rotate, thereby achieving the transmission operation of the first conveying device 120.

In the above embodiments, each roller can be correspondingly provided with a driving source and a first transmission part 121 to drive the roller. Adjacent rollers can also be connected by belts or chains, allowing all rollers in the roller group to rotate. In this case, only one or a small number of driving sources and the first transmission part 121 can be set up to drive all rollers to rotate.

In the above embodiment, the extension direction of the rotation axis of each of the rollers in the first roller group 1231 and the second roller group 1232 can be perpendicular to the conveying direction of the pickup device 110. At this time, the conveying direction of the first roller group 1231 and the second roller group 1232 is parallel to the moving direction of the pickup device 110. At this time, the pickup device 110 picks up the goods forward, and the first roller group 1231 and the second roller group 1232 transport the goods backward. Therefore, when the pickup device 110 protrudes from the rollers of the first roller group 1231 and the second roller group 1232, the pickup device 110 will block the goods. Therefore, it is necessary to lower the pickup device 110 to a position below the rollers of the first roller group 1231 and the second roller group 1232. At this point, it is necessary to adjust the position of the pickup device 110 relative to the first conveying device 120, so an adjustment device needs to be added to the handling mechanism 100, which makes the structure of the handling mechanism 100 more complex.

Based on this, in another embodiment, the extension direction of the rotation axis of each roller in the first roller group 1231 and the second roller group 1232 is parallel to the transport direction of the pickup device 110. At this time, the transmission direction of the first roller group 1231 and the second roller group 1232 is perpendicular to the moving direction of the pickup device 110. That is, when the pickup device 110 picks up the goods forward, the first roller group 1231 and the second roller group 1232 transport the goods towards adjacent sides. Therefore, when the pickup device 110 does not obstruct the goods, there is no need to lift or lower the pickup device 110, making the structure of the handling mechanism 100 simple.

In an embodiment, the first storage shelf 201 and the second storage shelf 202 each may include a shelf body 230, with the aforementioned storage space 210 on the shelf body 230. The second conveying part 222 may include a conveyor belt 2221, a first transmission shaft 2222, and a second transmission shaft 2223. The first transmission shaft 2222 and the second transmission shaft 2223 are both rotatably connected to the shelf body 230. The first transmission shaft 2222 is parallel to the second transmission shaft 2223, and the conveyor belt 2221 can be sleeved on the first transmission shaft 2222 and the second transmission shaft 2223. Specifically, synchronous wheels are fixedly set on the first transmission shaft 2222 and the second transmission shaft 2223, and the synchronous wheels rotate together with the first transmission shaft 2222 and the second transmission shaft 2223. The conveyor belt 2221 is sleeved on the synchronous wheels. The third transmission part 221 is rotatably connected to the shelf body 230, and the third transmission part 221 is rotatably connected to the first transmission shaft 2222. In this solution, the storage mechanism 200 has a simple structure, is easy to manufacture, and has a lower cost.

In some embodiments, the third transmission part 221 may include a sheave, a shaft, and a conveyor belt. The sheave is rotatably connected to the shelf body 230 through the shaft, and the conveyor belt is sleeved on the shaft and the first transmission shaft 2222. When the second transmission part 122 drives the sheave to rotate, the sheave drives the shaft to rotate, and the shaft drives the first transmission shaft 2222 to rotate through the conveyor belt.

In the above embodiment, the lifting mechanism can be set on the shelf body 230, thereby further simplifying the structure of the goods handling device.

In another embodiment, the pickup device 110 may include a pickup part 111, a first driving component 112, and a second driving component 113. The pickup part 111 may be disposed on the first driving component 112, and the first driving component 112 may drive the pickup part 111 to move. The first driving component 112 may be connected to the second driving component 113. The second driving component 113 can drive the first driving component 112 to move, and the direction of movement of the first driving component 112 can be the same as that of the pickup part 111. The first driving component 112 can independently drive the pickup part 111 to move.

This solution can increase the movement range of the pickup unit 111, thereby extending the distance for the pickup unit 111 to grab goods, enabling the pickup device 110 to grab goods at longer distances and improve its pickup capacity.

In addition, by setting the first driving component 112 and the second driving component 113, the movement speed of the pickup part 111 driven by the first driving component 112 and the movement speed of the pickup part 111 driven by the second driving component 113 are different. At this point, the second driving component 113 can drive the pickup part 111 to move quickly, thereby increasing the movement speed of the pickup part 111. When the pickup unit 111 approaches its designated position for unloading, it can be slowly driven to move by the first driving component 112 to prevent it from moving too fast and causing collisions with other components. At this point, it is possible to increase the movement speed of the pickup device 110 while also improving its safety and reliability in transporting goods.

In the above embodiments, both the first driving component 112 and the second driving component 113 can be power structures such as cylinders, hydraulic cylinders, linear motors, etc. The first driving component 112 and the second driving component 113 can also be other structures, which are not limited in the present disclosure.

In the above embodiments, the pickup unit 111 can use hooks, claws, or magnetic suction to clamp the goods. At this time, a hanging part or a clamping position need to be installed on the goods, so the pickup device 110 can only handle such goods and is difficult to accommodate more types of goods.

In another embodiment, the pickup part 111 includes a main part 1111 and a suction part 1112. The suction part 1112 can be provided on the main part 1111, and the main part 1111 can be connected to the first driving component 112. The main part 1111 can be provided with a ventilation channel, and the suction part 1112 can be provided with a first through hole, with the ventilation channel connected to the first through hole.

This solution can ventilate or evacuate the ventilation channel. When the ventilation channel is evacuated, the ventilation channel becomes negative pressure, and the goods can be adsorbed onto the suction part 1112. When the ventilation channel is ventilated, the pressure inside the ventilation channel is positive, thereby achieving desorption of the goods. The pickup unit 111 with this structure has lower requirements for the type, material, and shape of the goods, making the pickup unit 111 compatible with more types of goods and improving the compatibility of the handling mechanism 100.

The pickup unit 111 disclosed in the present disclosure is not limited to the above structure and can also be picked up by electrostatic adsorption.

In another embodiment, the number of suction parts 1112 can be at least two, and at least two suction parts 1112 can be located on opposite sides of the main part 1111. At least two suction parts 1112 can be arranged along the direction of movement of the pickup part 111.

In this solution, at least two suction parts 1112 can be located on opposite sides of the main part 1111, so the pickup part 111 can grab the goods in opposite directions, thereby increasing the pickup direction of the pickup device 110. At this time, when the goods handling device is picking up and placing the goods on the two opposite shelves 400, it only needs to move the pickup device 110 in different directions, without the need to rotate the goods handling device and handling mechanism 100 as a whole, thereby further reducing the space of the passage of the warehousing system, improving the space utilization rate of the warehousing system, and reducing storage costs.

In another embodiment, the first driving component 112 may include a first driving motor 1121, a first lead screw 1122, and a first guide rail 1123. The first driving motor 1121 may be fixed on the first guide rail 1123. Specifically, a mounting plate may be provided on the first guide rail 1123, and the first driving motor 1121 is mounted on the mounting plate. The first lead screw 1122 and the first guide rail 1123 can be rotatably connected, and the extension directions of the first lead screw 1122 and the first guide rail 1123 can be parallel. The pickup part 111 can slide along the extension direction of the first guide rail 1123 relative to the first guide rail 1123. The pickup part 111 is connected to the first lead screw 1122 for transmission, and the first driving motor 1121 can be connected to the first lead screw 1122. The first driving motor 1121 can drive the pickup part 111 to move through the first lead screw 1122.

The second driving component 113 may include a second driving motor 1131, a second lead screw 1132, and a second guide rail 1133. The second driving motor 1131 may be fixed on the second guide rail 1133, specifically, the second driving motor may be fixed on the mounting bracket 130 for carrying the second guide rail. The second lead screw 1132 can be rotatably connected to the second guide rail 1133, and the extension directions of the second lead screw 1132 and the second guide rail 1133 are parallel. The first guide rail 1123 slides along the extension direction of the second guide rail 1133 relative to the second guide rail 1133. The extension direction of the first guide rail 1123 is parallel to the extension direction of the second guide rail 1133. The first guide rail 1123 is connected to the second lead screw 1132 for transmission, and the second driving motor 1131 is connected to the second lead screw 1132. The second driving motor 1131 can drive the first guide rail 1123 to move through the second lead screw 1132.

In this solution, the lead screw and guide rail have good guiding performance, which can further improve the movement accuracy of the pickup device 110.

In the above embodiments, the handling mechanism 100 is prone to shaking during the lifting process, the goods on the handling mechanism 100 are easily thrown out, or the handling mechanism 100 is prone to collision with other mechanisms.

Based on this, in another embodiment, the handling mechanism 100 may include a mounting bracket 130, and both the pickup device 110 and the first conveying device 120 may be installed on the mounting bracket 130. The lifting mechanism is connected to the mounting bracket 130. The lifting mechanism can drive the pickup device 110 and the first conveying device 120 to lift or lower by the mounting bracket 130, where the mounting bracket 130 can be provided with a first guide part. The first storage shelf 201 and/or the second storage shelf 202 may be provided with a second guide part. The first guide part and the second guide part can slide and cooperate along the lifting direction of the mounting bracket 130.

In this solution, during the lifting or lowering process of the handling mechanism 100, the first guide part and the second guide part can guide and limit the handling mechanism 100, thereby avoiding shaking of the handling mechanism 100 and improving the safety and reliability of the handling mechanism 100 in transferring goods.

In the above embodiments, the first guide part and the second guide part can be guide rails or a cooperating structure of guide grooves and guide protrusions. The specific structure of the first guide part and the second guide part is not limited in the present disclosure.

In another embodiment, the storage mechanism 200 may further include a position detecting component, and the storage space 210 may be provided with a position detecting component, which can be used to detect the position information of the goods stored on the storage space 210, to detect whether the goods deviate from the preset position on the storage space 210. The preset position here is the third target position mentioned earlier.

In some embodiments, the position detecting component 240 can be a photoelectric sensor. When the goods on the storage space 210 deviate from the preset position, the light source of the photoelectric sensor is blocked, triggering the photoelectric sensor and issuing an alarm signal to indicate that the goods has deviated from the preset position and there is a risk of falling. When the goods on the storage space 210 are in the preset position, the photoelectric sensor is not triggered.

Alternatively, when the goods on storage space 210 is in the preset position, the photoelectric sensor is triggered; and when the goods on storage space 210 deviates from the preset position, the photoelectric sensor is not triggered.

In another embodiment, the position detecting component may be provided with a first position detecting component and a second position detecting component, which may be arranged at intervals along the conveying direction of the second conveying device 220. In this solution, the first position detecting component can be located on the side close to the first conveying device 120, and the second position detecting component can be located on the side away from the first conveying device 120. At this point, when the goods are transferred from the first conveying device 120 to the second conveying device 220, the first position detecting component is triggered. The second conveying device 220 continues to transport the goods. When the first position detecting component is released from the triggering state, the goods reaches the preset third target position, so the second conveying device 220 stops conveying.

When a malfunction occurs in the first position detecting component and the first position detecting component is released from the triggering state, the second conveying device 220 does not stop transmitting the goods, causing the second position detecting component to be triggered. When the second position detecting component is in the triggered state, the second conveying device 220 stops transferring, thereby avoiding the second conveying device 220 from continuing to transfer the goods and avoiding the risk of goods falling from the storage space 210, further improving the reliability and safety of the goods handling device.

In order to improve the grasping accuracy of the goods, in another embodiment, the handling mechanism 100 may further include a positioning device, which is connected to the pickup device 110 and used to determine the position information of the goods on the shelf. In this solution, by identifying the position information of the goods on the shelf, the goods are located, and then the goods grabbed, the grabbing accuracy of the goods can be improved to prevent the goods from falling off the pickup device 110. The position information obtained here may include the storage space of the goods on the shelf and the distance between the pickup device 110 and the goods.

In some embodiments, the positioning device can be the camera module. The camera module takes photos of the locations of the goods to perform positioning, such that the position information of the goods can be determined based on the photos. Alternatively, the positioning device can also be a laser positioning device, and the laser positioning device locates the position of the goods. Other components can also be used to obtain the position information of the goods, which is not limited in the present disclosure.

Based on the goods handling device according to embodiments of the present disclosure, a double-bin robot is further disclosed, which includes the goods handling device described in any one of the embodiments above.

In the disclosed goods handling device, the first storage shelf and the second storage shelf are arranged on both sides of the first conveying device along the conveying direction of the first conveying device. The storage mechanism increases the storage space of the storage mechanism, thereby further improving the storage and transferring capacity of the goods handling device and further enhancing the transferring efficiency. In addition, the first storage shelf and the second storage shelf are arranged on both sides of the first conveying device along the conveying direction of the first conveying device. The first conveying device can transport towards both sides, which can reduce the transmission path of the goods and further improve the efficiency of the goods handling device.

In the disclosed goods handling device, the pickup device is used for picking up the goods, and the goods are transferred between the first conveying device and the pickup device through the pickup device, and the goods can be transferred between the first conveying device and the storage space corresponding to the second conveying device. In this solution, the pickup device is responsible for picking up the goods from the shelf, while the first and second conveying devices are responsible for translating the goods. The conveying direction of the first conveying device is the same as that of the second conveying device. Therefore, during the pickup and putdown process, the goods do not need to rotate, and the transmission path of the goods is relatively short, thus saving the space occupied by the rotation and transmission path of the goods. Therefore, the volume of the goods handling device is relatively small.

The focus of the previous embodiments in the present disclosure is on the differences between each embodiment. As long as the optimization features between each embodiment are not contradictory, they can be combined to form a better embodiment. Considering the simplicity of the writing, they will not be repeated here.

The above description is only embodiments of the present disclosure and is not intended to limit the present disclosure. For those skilled in the art, various modifications and changes may be made in the present disclosure. Any modification, equivalent replacement, improvement, etc. present the spirit and principle of the present disclosure shall be included in the scope of the claims of the present disclosure.

## Claims

1. A goods handling method based on a goods handling device, wherein the goods handling device comprises a handling mechanism (100) and a storage mechanism (200), and the goods handling method comprises:
transferring, by the handling mechanism (100), goods from a shelf (400) to the storage mechanism (200) or from the storage mechanism (200) to the shelf (400), wherein the goods do not rotate during a process of being transferred from the shelf (400) to the storage mechanism (200) or from the storage mechanism (200) to the shelf (400).

2. The goods handling method according to claim 1, wherein the goods handling device further comprises a conveying device, the handling mechanism (100) comprises a pickup device (110), and the storage mechanism (200) comprises a storage space (210);
wherein transferring, by the handling mechanism (100), the goods from the shelf (400) to the storage mechanism (200) comprises:
controlling movement of the pickup device (110) to enable the pickup device (110) to translate the goods from the shelf (400) to the conveying device; and controlling the conveying device to translate the goods to place the goods at the storage space (210); and
wherein transferring, by the handling mechanism (100), the goods from the storage mechanism (200) to the shelf (400) comprises:
controlling the conveying device to pick up the goods from the storage space (210); and
controlling the movement of the pickup device (110) to enable the pickup device (110) to translate the goods from the conveying device to the shelf (400);
wherein the pickup device (110) and the conveying device (120) do not rotate during a process of transferring the goods.

3. The goods handling method according to claim 2, wherein before transferring, by the handling mechanism (100), the goods from the shelf (400) to the storage mechanism (200) or from the storage mechanism (200) to the shelf (400), the method further comprises:
receiving a control command; and determining a transferring mode for the goods according to the control command;
wherein in response to determining that the transferring mode is a pickup mode, executing pickup steps,
wherein the picking steps comprise:
controlling the pickup device (110) to move in a first direction to a first position; when the pickup device (110) is at the first position, picking up, by the pickup device (110), the goods from the shelf (400);
controlling the pickup device (110) to move in a second direction to a second position, to translate the goods to a first target position of the conveying device; and
controlling the conveying device to translate the goods in a third direction from the first target position to a second target position, to place the goods at the storage space (210); and
wherein in response to determining that the transferring mode is a putdown mode, executing putdown steps,
wherein the putdown steps comprise:
controlling the conveying device to translate the goods in a fourth direction from the second target position to the first target position; and
controlling the pickup device (110) to pick up the goods at the second position and move in the first direction to the first position, to translate the goods to the shelf (400);
wherein the first direction and the second direction are parallel and opposite, and the third direction and the fourth direction are parallel and opposite.

4. The goods handling method according to claim 3, wherein after controlling the pickup device (110) to move in the second direction to the second position, to translate the goods to the first target position of the conveying device, the method further comprises:
separating the pickup device (110) and the goods; and
moving the pickup device (110) in the second direction to the third position;
wherein after the conveying device translates the goods in the fourth direction from the second target position to the first target position, the method further comprises:
moving the pickup device (110) in the first direction from the third position to the second position; and
picking up, by the pickup device (110), the goods at the second position.

5. The goods handling method according to claim 3, wherein the conveying device comprises a first conveying device (120) and a second conveying device (220), the first conveying device (120) and the second conveying device (220) are both configured to translate the goods along the third direction or the fourth direction, and the second conveying device (220) is set at the storage space (210); and
in response to determining that the transferring mode is the pickup mode, controlling the conveying device to translate the goods in the third direction from the first target position to the second target position, to place the goods at the storage space (210) comprises:
controlling the pickup device (110) to move in the second direction to the second position, to translate the goods to the first target position of the first conveying device (120);
controlling the first conveying device (120) to translate the goods in the third direction;
receiving, by the second conveying device (220), the goods from the first conveying device (120); and translating, by the second conveying device (220), the goods in the third direction to the second target position to place the goods in the storage space (210); and
in response to determining that the transferring mode is the putdown mode, controlling the conveying device to translate the goods in a fourth direction from the second target position to the first target position comprises:
controlling the second conveying device (220) to translate the goods in the fourth direction; receiving, by the first conveying device (120), the goods from the second conveying device (220); and translating, by the first conveying device (120), the goods in the fourth direction to the first target position.

6. The goods handling method according to claim 3, wherein the first direction and the second direction intersect with the third direction and the fourth direction.

7. The goods handling method according to claim 5, wherein there is a plurality of storage spaces (210), the plurality of storage spaces (210) are arranged at intervals along a vertical direction, and each of the plurality of storage spaces (210) is correspondingly provided with a second conveying device (220); wherein the goods handling device further comprises a lifting mechanism; and
before controlling the first conveying device (120) to translate the goods in the third direction, or before controlling the second conveying device (220) to translate the goods in the fourth direction, the method further comprises:
controlling the lifting mechanism to lift or lower the first conveying device (120) and the pickup device (110), to dock the first conveying device (120) with the second conveying device (220) corresponding to one of the plurality of storage spaces (210).

8. The goods handling method according to claim 7, wherein the shelf (400) comprises a plurality of storage places, and the plurality of storage places are arranged at intervals along the vertical direction; and
before controlling the pickup device (110) to move in the first direction to the first position, the method further comprises:
controlling the lifting mechanism to lift or lower the first conveying device (120) and the pickup device (110) to a position corresponding to one of the plurality of storage places.

9. The goods handling method according to claim 8, wherein conveying directions of the first conveying device (120) and the second conveying device (220) are both horizontal, the storage space (210) corresponds to the storage place along the horizontal direction; and during a process of transferring the goods from the shelf to the storage mechanism (200) or from the storage mechanism (200) to the shelf by the handling mechanism (100), the goods are transferred between the storage space (210) and the storage place at a same height.

10. The goods handling method according to claim 7, wherein the storage mechanism (200) comprises a first storage shelf (201) and a second storage shelf (202), the first storage shelf (201) and the second storage shelf (202) both comprise the plurality of storage spaces (210) that are arranged at intervals along the vertical direction, and the first storage shelf (201) and the second storage shelf (202) are arranged on both sides of the first conveying device (120);
wherein controlling the conveying device to translate the goods in the third direction from the first target position to the second target position, to place the goods at the storage space (210), comprises:
transferring, by the first conveying device (120), the goods from the first target position to a second conveying device (220) of the storage space (210) in the first storage shelf (201) or the second storage shelf (202), and translating, by the second conveying device (220), the goods to the second target position to place the goods in the storage space (210);
wherein controlling the second conveying device (220) to translate the goods in the fourth direction comprises:
translating the goods from the second target position of the second conveying device (220) of the storage space (210) of the first storage shelf (201) or the second storage shelf (202) to the first conveying device (120).

11. The goods handling method according to claim 10, wherein storage spaces (210) on a same layer of the first storage shelf (201) and the second storage shelf (202) are arranged in a staggered manner.

12. The goods handling method according to claim 5, wherein the storage space (210) is provided with a first position detecting component, wherein the first position detecting component is located on a side of the storage space (210) away from the first conveying device (120);
controlling the conveying device to translate the goods in the third direction from the first target position to the second target position, to place the goods at the storage space (210) further comprises:
during a process of translating the goods from the first target position to the second target position, in response to determining that the first position detecting component is triggered, stopping the second conveying device (220), to place the goods in the storage space (210).

13. The goods handling method according to claim 12, wherein the storage space (210) is further provided with a second position detecting component, the first position detecting component and the second position detecting component are arranged at intervals along the third direction, and the second target position is located between the first position detecting component and the second position detecting component; and
controlling the conveying device to translate the goods in the third direction from the first target position to the second target position, to place the goods at the storage space (210) further comprises:
in response to determining that the second position detecting component is triggered, starting the second conveying device (220) to receive the goods from the first conveying device (120); and
in response to determining that the second position detecting component is released from triggering or the first position detecting component is triggered, stopping the second conveying device (220), to place the goods at the storage space (210).

14. The goods handling method according to claim 5, wherein the first conveying device (120) comprises a driving source, a first transmission part (121), a second transmission part (122), and a first conveying part (123), the driving source is connected to the first conveying part (123) through the first transmission part (121), and the first transmission part (121) cooperates with the second transmission part (122), wherein the second conveying device (220) comprises a third transmission part (221) and a second conveying part (222), and the third transmission part (221) cooperates with the second conveying part (222);
in a case that the first conveying device (120) is docked with the second conveying device (220), the second transmission part (122) is cooperated with the third transmission part (221), such that the second transmission part (122) drives the second conveying part (222) through the third transmission part (221).

15. The goods handling method according to claim 1, wherein the goods handling device further comprises a walking mechanism or a track, and the handling mechanism and the storage mechanism (200) are both set on the walking mechanism or the track; and the method further comprises:
moving, by the walking mechanism or the track, the goods handling device to a position where the pickup device (110) is opposite to the shelf (400).

16. The goods handling method according to claim 15, wherein the goods handling device further comprises a goods positioning device;
after moving, by the walking mechanism or the track, the goods handling device to the position where the pickup device (110) is opposite to the shelf (400), the method further comprises:
determining, by the goods positioning device, position information of the goods on the shelf;
controlling the pickup device (110) to pick up the goods, comprising:
controlling the pickup device (110) to pick up the goods according to the position information.

17. A goods handling method based on a goods handling device, wherein the goods handling device comprises a handling mechanism (100) and a storage mechanism (200), wherein the handling mechanism (100) is configured to transfer goods to the storage mechanism (200), and the storage mechanism (200) has a plurality of storage spaces (210); and the goods handling method comprises:
according to an attribute of the goods, determining one of the plurality of storage spaces (210) corresponding to the attribute for storing the goods; and
controlling the handling mechanism (100) to transfer the goods to the storage space (210) corresponding to the attribute.

18. The goods handling method according to claim 17, wherein after according to the attribute of the goods, determining the storage space (210) corresponding to the attribute for storing the goods, the method further comprises:
according to the attribute of the goods, and recorded attributes and idle statuses of the plurality of storage spaces, retrieving the storage space (210) that corresponds to the attribute of the goods and is in an idle state.

19. The goods handling method according to claim 18, wherein the handling mechanism (100) is provided with an attribute detecting device (300) for detecting the attribute of the goods; and
before according to the attribute of the goods, determining the storage space (210) corresponding to the attribute for storing the goods, the method further comprises:
controlling the handling mechanism (100) to pick up the goods from the shelf (400) or a conveyor line; and
controlling the attribute detecting device (300) to detect the attribute of the goods.

20. The goods handling method according to claim 19, wherein the attribute detecting device (300) is configured to detect weight of the goods; and
according to the attribute of the goods, determining the storage space (210) corresponding to the attribute for storing the goods comprises:
according to the weight of the goods, determining the storage space (210) corresponding to the weight for storing the goods; and
controlling the handling mechanism (100) to transfer the goods to the storage space (210) corresponding to the attribute comprises:
controlling the handling mechanism (100) to transfer the goods to the storage space (210) corresponding to the weight.

21. The goods handling method according to claim 20, wherein the plurality of storage spaces (210) are arranged at intervals along a vertical direction, and for one of the plurality of storage spaces (210), weight of goods stored in the storage space (210) is greater than weight of goods stored in a storage space (210) located above the storage space (210).

22. The goods handling method according to claim 19, wherein the attribute detecting device (300) is configured to detect a volume of the goods; and
according to the attribute of the goods, determining the storage space (210) corresponding to the attribute for storing the goods comprises:
according to the volume of the goods, determining the storage space (210) corresponding to the volume of the goods for storing the goods; and
controlling the handling mechanism (100) to transfer the goods to the storage space (210) corresponding to the attribute comprises:
controlling the handling mechanism (100) to transfer the goods to the storage space (210) corresponding to the volume.

23. The goods handling method according to claim 22, wherein some of the plurality of storage spaces (210) have different sizes.

24. The goods handling method according to claim 17, wherein each of the plurality of storage spaces (210) has storage regions arranged in parallel, and each of the storage regions stores one piece of goods; and
controlling the handling mechanism (100) to transfer the goods to the storage space (210) corresponding to the attribute comprises:
controlling the handling mechanism (100) to transfer the goods to an idle storage region in the storage space (210) corresponding to the attribute.

25. The goods handling method according to claim 17, wherein the plurality of storage spaces (210) are arranged at intervals along a vertical direction, and the goods handling device further comprises a lifting mechanism, the handling mechanism (100) comprises a pickup device (110) and a first conveying device (120), the storage mechanism (200) comprises a second conveying device (220), the second conveying device (220) is set at the storage space (210), a conveying direction of the second conveying device (220) is parallel to a conveying direction of the first conveying device (120), and the conveying direction of the first conveying device (120) intersects with a moving direction of the pickup device (110); and
before according to the attribute of the goods, determining the storage space (210) corresponding to the attribute for storing the goods, the method further comprises:
controlling the pickup device (110) to move in a first direction to a first position;
when the pickup device (110) is at the first position, picking up, by the pickup device (110), the goods from the shelf (400) or a conveyor line;
controlling the pickup device (110) to move in a second direction to a second position, to translate the goods to a first target position of the first conveying device (120);
controlling the handling mechanism (100) to transfer the goods to the storage space (210) corresponding to the attribute comprises:
controlling the lifting mechanism to lift or lower the handling mechanism (100), to enable the first conveying device (120) to be docked with the second conveying device (220) of the storage space (210) corresponding to the attribute;
controlling the first conveying device (120) to translate the goods in a third direction;
receiving, by the second conveying device (220), the goods from the first conveying device (120); and
translating, by the second conveying device (220), the goods in the third direction to a second target position to place the goods in the storage space (210); and
wherein the first direction and the second direction are parallel and opposite, and the third direction intersects with the first direction.

26. The goods handling method according to claim 25, further comprising:
controlling the second conveying device (220) to translate the goods in a fourth direction;
receiving, by the first conveying device (120), the goods from the second conveying device (220);
translating, by the first conveying device (120), the goods in the fourth direction to the first target position; and
controlling the pickup device (110) to pick up the goods at the second position and move in the first direction to the first position, to translate the goods to the shelf (400);
wherein the third direction and the fourth direction are parallel and opposite.

27. The goods handling method according to claim 26, wherein each of the plurality of storage spaces (210) is provided with stopping parts (231), each of the plurality of storage spaces (210) comprises storage regions arranged in parallel, each of the storage regions is used to store one piece of goods, and each of the storage region is provided with at least one stopping part (231) for stopping the goods in the third direction or the fourth direction; and
before controlling the first conveying device (120) to translate the goods in the third direction, or before controlling the second conveying device (220) to translate the goods in the fourth direction, the method further comprises:
in a case where a piece of goods has been stored in a storage region of the storage space (210), activating a stopping part (231) of the storage region that has stored the piece of goods, to enable the stopping part (231) to stop the piece of goods stored in the storage region from moving out of the storage region in the third direction or the fourth direction during a process of the first conveying device (120) translating the goods in the third direction, or during a process of the second conveying device (220) translating the goods in the fourth direction.

28. The goods handling method according to claim 25, wherein each of the plurality of storage spaces (210) has storage regions arranged in parallel, and each of the storage regions stores one piece of goods; and the second conveying device (220) comprises third transmission parts (221) and second transmission parts (222), wherein the third transmission parts (221) are respectively connected to the second transmission parts (222), and the third transmission parts (221) are used to drive the goods carried on the second transmission parts (222);
controlling the pickup device (110) to move in the second direction to the second position, to translate the goods to the first target position of the first conveying device (120) comprises:
controlling the pickup device (110) to move in the second direction to the second position corresponding to one of the storage regions, to translate the goods to the first target position corresponding to the one of the storage regions; and
transferring, by the first conveying device (120), the goods to a corresponding storage region, and transferring, by the second conveying part (222) corresponding to the storage region, the goods.

29. A goods handling device, comprising a handling mechanism (100) and a storage mechanism (200), wherein the storage mechanism (200) comprises a storage space (210);
wherein the handling mechanism (100) is capable of translating goods between a shelf (400) and the storage space (210).

30. The goods handling device according to claim 29, wherein the handling mechanism (100) comprises a pickup device (110) and a first conveying device (120), wherein the pickup device (110) is configured to transfer the goods such that the goods are translated between the first conveying device (120) and the shelf (400); wherein a conveying direction of the first conveying device (120) intersects with a moving direction of the pickup device (110);
wherein the storage space (210) of the storage mechanism (200) is used to store the goods, such that the goods are translated between the first conveying device (120) and the storage mechanism (200).

31. The goods handling device according to claim 30, wherein the storage mechanism (200) comprises a first storage shelf (201) and a second storage shelf (202), the first storage shelf (201) and the second storage shelf (202) each have the storage space (210), and the first storage shelf (201) and the second storage shelf (202) are arranged on a same side or both sides of the first conveying device (120) along the conveying direction of the first conveying device (120).

32. The goods handling device according to claim 31, wherein in a case that the first storage shelf (201) and the second storage shelf (202) are arranged on the same side of the first conveying device (120) along the conveying direction of the first conveying device (120), the first storage shelf (201) is located between the handling mechanism (100) and the second storage shelf (202), or the first storage shelf (201) and the second storage shelf (202) are arranged side by side and facing the first conveying device (120).

33. The goods handling device according to claim 31 or 32, wherein the storage space (210) is provided with a second conveying device (220), and the conveying direction of the first conveying device (120) is same as a conveying direction of the second conveying device (220); and the first conveying device (120) cooperates with the second conveying device (220) to enable the goods to be translated between the first conveying device (120) and the storage space (210).

34. The goods handling device according to claim 33, wherein the goods handling device further comprises a lifting mechanism, wherein the lifting mechanism is connected to the handling mechanism (100) and the lifting mechanism is used for lifting or lowering the handling mechanism (100).

35. The goods handling device according to claim 34, wherein the first storage shelf (201) and the second storage shelf (202) each comprise a plurality of storage spaces (210), the plurality of storage spaces (210) in the first storage shelf (201) and the second storage shelf (202) are arranged at intervals along the vertical direction, each of the plurality of storage spaces (210) is provided with a second conveying device (220), and when the goods handling device picks up or puts down the goods, the first conveying device (120) is docked with the second conveying device (220) corresponding to one of the plurality of storage spaces (210).

36. The goods handling device according to claim 35, wherein the first storage shelf (201) and the second storage shelf (202) are arranged on both sides of the first conveying device (120) along the conveying direction of the first conveying device (120), or the first storage shelf (201) and the second storage shelf (202) are arranged on a same side of the first conveying device (120) along the conveying direction of the first conveying device (120) and the first storage shelf (201) and the second storage shelf (202) are arranged side by side facing the first conveying device (120); wherein storage spaces (210) on a same layer of the first storage shelf (201) and the second storage shelf (202) are arranged in a staggered manner.

37. The goods handling device according to claim 29, wherein the goods handling device further comprises a walking mechanism and a base (500), wherein the handling mechanism (100) and the storage mechanism (200) are both set on the base, and the base (500) is set on the walking mechanism, and the walking mechanism is configured to drive the base (500) to move.

38. The goods handling device according to claim 29, wherein the goods handling device further comprises a track and a base (500), wherein the handling mechanism (100) and the storage mechanism (200) are both set on the base (500), and the base (500) is in sliding cooperation with the track, and the base (500) is slidable along an extension direction of the track.

39. The goods handling device according to claim 33, wherein the first conveying device (120) comprises a first transmission part (121) and a first conveying part (123), wherein the first transmission part (121) is connected to the first conveying part (123); and the second conveying device (220) comprises a third transmission part (221) and a second conveying part (222), wherein the third transmission part (221) cooperates with the second conveying part (222); and
the first conveying device (120) further comprises a driving source and a second transmission part (122), wherein the driving source is connected to the first conveying part through the first transmission part (121), the first transmission part (121) cooperates with the second transmission part (122), and the second transmission part (122) cooperates with the third transmission part (221), to enable the second transmission part (122) to drive the second conveying part (222) through the third transmission part (221); or the second conveying device (220) further comprises a driving source and a second transmission part (122), wherein the driving source is connected to the second conveying part (222) through the third transmission part (221), the third transmission part (221) is connected to the second transmission part (122), and the second transmission part (122) cooperates with the first transmission part (121), and the second transmission part (122) cooperates with the first transmission part (121), to enable the second transmission part (122) to drive the first conveying part (123) through the first transmission part (121).

40. The goods handling device according to claim 39, wherein the first conveying part (123) comprises a first roller group (1231) and a second roller group (1232), wherein the first roller group (1231) and the second roller group (1232) each comprise rollers that are parallel to each other and arranged at intervals along the conveying direction of the first conveying device (120), and the pickup device (110) is located between the first roller group (1231) and the second roller group (1232).

41. The goods handling device according to claim 40, wherein an extension direction of a rotation axis of each of the rollers in the first roller group (1231) and the second roller group (1232) is parallel to a conveying direction of the pickup device (110).

42. The goods handling device according to claim 39, wherein the first conveying device (120) further comprises a third roller group and a lifting mechanism, wherein the third roller group comprises rollers that are parallel to each other and arranged at intervals along a moving direction of the pickup device (110), the first conveying part (123) is located between two adjacent rollers of the third roller group, the lifting mechanism is connected to the first conveying part (123), wherein the lifting mechanism is configured to lift or lower the first conveying part (123) to enable a surface of the first conveying part (123) is higher or lower than a surface of the rollers in the third roller group.

43. The goods handling device according to claim 39, wherein the first storage shelf (201) and the second storage shelf (202) each comprise a shelf body (230), and the second conveying part (222) comprises a conveyor belt (2221), a first transmission shaft (2222), and a second transmission shaft (2223), wherein the first transmission shaft (2222) and the second transmission shaft (2223) are both rotatably connected to the shelf body (230), the first transmission shaft (2222) is parallel to the second transmission shaft (2223), the conveyor belt (2221) is sleeved on the first transmission shaft (2222) the second transmission shaft (2223), the third transmission part (221) is rotatably connected to the shelf body (230), and the third transmission part (221) is connected to the first transmission shaft (2222).

44. The goods handling device according to claim 30, wherein the pickup device (110) comprises a pickup part (111), a first driving component (112), and a second driving component (113), wherein the pickup part (111) is set on the first driving component (112), the first driving component (112) is configured to drive the pickup part (111) to move, the first driving component (112) is connected to the second driving component (113), the second driving component (113) is configured to drive the first driving component (112) to move, and a moving direction of the first driving component (112) is consistent with a moving direction of the pickup part (111).

45. The goods handling device according to claim 44, wherein
the pickup part (111) is configured to pick up the goods with a hook;
the pickup part (111) is configured to pick up the goods with a claw;
the pickup part (111) is configured to pick up the goods by magnetic suction; or
the pickup part (111) comprises a main part (1111) and a suction part (1112), wherein the suction part (1112) is provided on the main part (1111), and the main part (1111) is connected to the first driving component (112), wherein the main part (1111) is provided with a ventilation channel, the suction part (1112) is provided with a first through hole, and the ventilation channel is connected to the first through hole.

46. The goods handling device according to claim 45, wherein the first driving component (112) comprises a first driving motor (1121), a first lead screw (1122), and a first guide rail (1123), wherein the first driving motor (1121) is fixed on the first guide rail (1123), the first lead screw (1122) is rotatably connected to the first guide rail (1123), and an extension direction of the first lead screw (1122) and an extension direction of the first guide rail (1123) are parallel; wherein the pickup part (111) is slidable along the extension direction of the first guide rail (1123) relative to the first guide rail (1123), and the pickup part (111) is connected to the first lead screw (1122) for transmission, the first driving motor (1121) is connected to the first lead screw (1122), and the first driving motor (1121) is configured to drive the pickup part (111) to move through the first screw (1122); and
the second driving component (113) comprises a second driving motor (1131), a second lead screw (1132), and a second guide rail (1133), wherein the second driving motor (1131) is fixed on the second guide rail (1133), and the second lead screw (1132) is rotatably connected to the second guide rail (1133), wherein an extension direction of the second lead screw (1132) and an extension direction of the second guide rail (1133) are parallel, the first guide rail (1123) is slidable along the extension direction of the second guide rail (1133) relative to the second guide rail (1133), wherein the extension direction of the first guide rail (1123) is parallel to the extension direction of the second guide rail (1133), and the first guide rail (1123) is connected to the second lead screw (1132) for transmission, the second driving motor (1131) is connected to the second lead screw (1132), and the second driving motor (1131) is configured to drive the first guide rail (1123) to move through the second lead screw (1132).

47. The goods handling device according to claim 34, wherein the handling mechanism (100) comprises a mounting bracket (130), the pickup device (110) and the first conveying device (120) are both arranged on the mounting bracket (130), the lifting mechanism is connected to the mounting bracket (130), and the lifting mechanism is configured to drive the pickup device (110) and the first conveying device (120) to lift or lower through the mounting bracket (130), wherein the mounting bracket (130) is provided with a first guide part, and the first storage shelf (201) and/or the second storage shelf (202) are provided with second guide parts, wherein the first guide part is in slidably cooperation with the second guide parts along a lifting direction of the mounting bracket (130).

48. The goods handling device according to claim 29, wherein the storage mechanism (200) further comprises a position detecting component, wherein the storage space (210) is provided with the position detecting component, and the position detecting component is configured to detect position information of goods stored on the storage space (210) to detect whether the goods deviates from a preset position on the storage space (210).

49. The goods handling device according to claim 48, wherein the position detecting component comprises a first position detecting component and a second position detecting component, wherein the first position detecting component and the second position detecting component are arranged at intervals along the conveying direction of the first conveying device (120).

50. The goods handling device according to claim 29, further comprising a goods position determining mechanism, wherein the storage mechanism (200) is provided with a plurality of storage spaces (210), the goods position determining mechanism is configured to determine the storage space (210) corresponding to an attribute of the goods for storing the goods, and the handling mechanism (100) is configured to convey the goods between the storage mechanism (200) and the shelf (400) or a conveyor line.

51. The goods handling device according to claim 50, wherein the goods handling device further comprises an attribute detecting device (300), wherein the attribute detecting device (300) is set on the handling mechanism (100), the attribute detecting device (300) is connected to the goods position determining mechanism, and the attribute detecting device (300) is configured to transmit a detected attribute of the goods to the goods position determining mechanism.

52. The goods handling device according to claim 51, wherein the plurality of storage spaces (210) are arranged at intervals in the vertical direction, and the goods handling device further comprises a lifting mechanism; and the storage mechanism (200) comprises second conveying devices (220), and each of the plurality of storage spaces (210) is provided with a second conveying device (220), wherein a conveying direction of the second conveying device (220) is parallel to a conveying direction of the first conveying device (120);
wherein the goods handling device further comprises a lifting mechanism, wherein the first conveying device (120) and the pickup device (110) are both set on the lifting mechanism, and the lifting mechanism is configured to lift or lower the first conveying device (120) and the pickup device (110).

53. The goods handling device according to claim 52, wherein each of the plurality of storage spaces (210) is provided with stopping parts (231), each of the plurality of storage spaces (210) comprises storage regions arranged in parallel, each of the storage regions stores one piece of goods, and each of the storage regions is correspondingly provided with at least one stopping part (231) for stopping the goods in a third direction or a fourth direction.

54. A double-bin robot, comprising the goods handling device according to any one of claims 29 to 47, wherein goods transferred by the double-bin robot is a bin.

55. A warehousing system, comprising:
shelves (400) and a goods handling device, wherein the warehousing system applies the goods handling method according to any one of claims 1 to 16 or 17-28;
wherein the shelves (400) are used for storing the goods, and the goods handling device is capable of being docked with the shelf (400) to pick up and put down the goods.

56. The warehousing system according to claim 55, comprising:
a passage between adjacent shelves (400) for the goods handling device to pass through;
wherein the storage mechanism (200) comprises a first storage shelf (201) and a second storage shelf (202), wherein the first storage shelf (201) and the second storage shelf (202) are arranged on both sides of the handling mechanism (100), and a moving direction of the goods handling device in the passage is a direction along a line connecting centers of the first storage shelf (201) and the second storage shelf (202).
